# EUROPEAN PATENT APPLICATION

(11) **EP 4 656 473 A1**
(43) Date of publication of application: **03.12.2025**
(21) Application number: 25178802.2
(22) Date of filing: 26.05.2025
(51) Int. Cl.: B60T 13/74, F16D 55/226, F16D 65/18

(54) **SPLIT-TYPE ELECTRO-MECHANICAL BRAKE APPARATUS AND VEHICLE**

(30) Priority: 28.05.2024 CN 202410681141
(71) Applicant: Huawei Digital Power Technologies Co., Ltd., Shenzhen, Guangdong 518043 (CN)
(72) Inventor: JIN, Xin, Shenzhen, Guangdong, 518043 (CN); HE, Yuhui, Shenzhen, Guangdong, 518043 (CN); LUO, Yuehao, Shenzhen, Guangdong, 518043 (CN); LI, Xianan, Shenzhen, Guangdong, 518043 (CN); WU, Gang, Shenzhen, Guangdong, 518043 (CN)
(74) Representative: Maiwald GmbH

(57) **Abstract**

This application provides a split-type electro-mechanical brake apparatus and a vehicle. The electro-mechanical brake apparatus includes a brake motor, a reducer, a ball screw, and a split piston, one end of the ball screw is configured to be in transmission connection to the brake motor through the reducer, the other end of the ball screw is configured to drive the split piston, and the split piston is configured to split a received driving force through two split protrusions, to push a same friction plate jointly through the two split protrusions to brake a wheel. The split piston includes two end faces that face away from each other, one end face includes a transmission groove, and the transmission groove is configured to be in transmission connection to the other end of the ball screw. The two split protrusions are arranged at a spacing on the other end face, and in an arrangement direction of the two split protrusions, a length of the other end face is greater than a length of the one end face, and the spacing between the two split protrusions is less than or equal to an inner diameter of the transmission groove. In the electro-mechanical brake apparatus in this application, the two split protrusions are used, so that pressure applied to the friction plate is more even.

## Description

### TECHNICAL FIELD

This application relates to the field of vehicle technologies, and specifically, to a split-type electro-mechanical brake apparatus and a vehicle.

### BACKGROUND

In an electro-mechanical brake (electro-mechanical brake, EMB) apparatus, a motor cooperates with a mechanical feed mechanism to drive a brake to brake. The electro-mechanical brake apparatus is characterized by a simple structure, high responsiveness, smooth load transfer, no hydraulic pipe, and the like, and has high transfer efficiency. In addition, the electro-mechanical brake apparatus trends toward miniaturization, to adapt to wheel-side space of a vehicle.

### SUMMARY

This application provides a split-type electro-mechanical brake apparatus and a vehicle. Two split protrusions are used, so that pressure applied to one friction plate is more even.

According to a first aspect, this application provides a split-type electro-mechanical brake apparatus. The electro-mechanical brake apparatus includes a brake motor, a reducer, a ball screw, and a split piston, one end of the ball screw is configured to be in transmission connection to the brake motor through the reducer, the other end of the ball screw is configured to drive the split piston, and the split piston is configured to split a received driving force through two split protrusions, to push a same friction plate jointly through the two split protrusions to brake a wheel. The split piston includes two end faces that face away from each other, one end face includes a transmission groove, and the transmission groove is configured to be in transmission connection to the other end of the ball screw.

The two split protrusions are arranged at a spacing on the other end face, and in an arrangement direction of the two split protrusions, a length of the other end face is greater than a length of the one end face, and the spacing between the two split protrusions is less than or equal to an inner diameter of the transmission groove.

In the electro-mechanical brake apparatus provided in this application, two ends of the ball screw are respectively configured to be in transmission connection to the reducer and the split piston, the brake motor drives, through the reducer, the ball screw to rotate, and the ball screw is configured to drive the split piston to push the friction plate close to or away from a brake disc to abut against or release the brake disc. In the electro-mechanical brake apparatus, the two split protrusions are arranged at the spacing on the other end face of the split piston, and the two split protrusions are configured to abut against a same surface of the friction plate to simultaneously transfer a driving force to the friction plate.

Therefore, in the electro-mechanical brake apparatus provided in this application, the split piston splits a driving force of the ball screw to the two split protrusions, which achieves effect similar to that of double-cylinder or multi-cylinder braking. A contact area in which the split piston acts on the friction plate is increased, so that a force applied to the friction plate is more even, and an overall volume of the electro-mechanical brake apparatus is effectively controlled.

In the electro-mechanical brake apparatus provided in this application, the spacing between the two split protrusions is controlled, to increase a thickness dimension of the split piston at the transmission groove, and avoid impact on structure strength of the split piston due to an excessively thin groove bottom of the transmission groove.

In an implementation, the friction plate, the two split protrusions, the ball screw, and the brake motor are sequentially arranged in an axial direction of the ball screw.

In an implementation, an area of the one end face is smaller than an area of the other end face, and the one end face is inclined relative to the other end face.

In this implementation, in the axial direction of the ball screw, a length of the split piston is gradually increased from one end close to the ball screw to the other end close to the friction plate. This ensures split effect of the split piston on a driving force. In addition, the one inclined end face is used, to improve structure strength of the split piston.

In an implementation, an angle of the one end face relative to the other end face ranges from 15 degrees to 25 degrees.

In this implementation, on the basis of ensuring structure stability of the split piston, in the electro-mechanical brake apparatus, a range of the angle of the one end face relative to the other end face is controlled, to ensure that the split piston reliably transfers a driving force to the friction plate. In addition, this can avoid impact on split effect of the split piston on a driving force due to an excessively large angle of the one end face relative to the other end face, and avoid impact on arrangement of another component due to an excessively large length of the split piston caused by an excessively small angle of the one end face relative to the other end face.

In an implementation, a driving force applied by the ball screw to the split piston in the axial direction of the ball screw ranges from 35 kN to 65 kN.

In an implementation, a dimension in a length direction of the other end face is greater than a dimension in a width direction of the other end face and greater than a dimension in a thickness direction of the two end faces, and the length direction of the other end face is the arrangement direction of the two split protrusions, and the width direction of the other end face, the length direction of the other end face, and the thickness direction of the two end faces are perpendicular to each other.

In this implementation, a dimension in the arrangement direction of the two split protrusions is larger, so that better split effect on a driving force can be achieved, to ensure that a force applied to the friction plate is even.

In an implementation, the arrangement direction of the two split protrusions is parallel to a length direction of the friction plate.

In this implementation, the arrangement direction of the two split protrusions is approximately parallel to a circumferential tangent of the brake disc, and a driving force of the split piston is split and then applied to the friction plate. The length direction of the friction plate is parallel to the circumferential tangent of the brake disc. Therefore, the two split protrusions are arranged in the length direction of the friction plate, to increase pushing forces of two sides of the split piston in the length direction of the friction plate, to further increase an effective contact area between the friction plate and the brake disc to improve braking effect.

In an implementation, an outer diameter of each split protrusion is less than the inner diameter of the transmission groove.

In this implementation, the ball screw transfers a driving force to the split piston through a groove bottom of the transmission groove, and the split piston transfers a driving force to the friction plate through the two split protrusions. In the electro-mechanical brake apparatus, a dimension of each split protrusion is reduced, to control a contact area between the split protrusion and the friction plate, to avoid a case in which a force applied to the friction plate is dispersed and braking effect of the electro-mechanical brake apparatus is affected because pressure applied by the split piston to two sides of the friction plate is greater than pressure applied to a middle part of the friction plate.

In an implementation, the spacing between the two split protrusions is greater than the outer diameter of each split protrusion.

In this implementation, in the electro-mechanical brake apparatus, the spacing between the two split protrusions is increased, to ensure a contact area between a middle part of the split piston and the friction plate, to avoid a case in which pressure applied by the split piston to the friction plate is concentrated on two sides and braking effect of the electro-mechanical brake apparatus is affected.

In an implementation, the split piston includes two opposite ends in the arrangement direction of the split protrusions, one split protrusion and one end of the split piston are adjacently arranged, and the other split protrusion and the other end of the split piston are adjacently arranged.

In this implementation, the transmission groove is configured to accommodate the ball screw, and an axis of the ball screw coincides with an axis of the transmission groove. In the arrangement direction of the two split protrusions, the axis of the transmission groove is between the two split protrusions. The two split protrusions are relatively close to an edge of the split piston, so that better split effect can be achieved, the middle part of the split piston is in full contact with the friction plate, and a force applied to the friction plate in the length direction is more even.

In an implementation, in the arrangement direction of the two split protrusions, both a spacing between the one split protrusion and the one end of the split piston and a spacing between the other split protrusion and the other end of the split piston are less than the outer diameter of each split protrusion.

In this implementation, in the electro-mechanical brake apparatus, a spacing between each split protrusion and an adjacent end part of the split piston is reduced, to increase the spacing between the two split protrusions, to ensure split effect of the split piston on the driving force of the ball screw.

In an implementation, the other end face includes two groups of auxiliary protrusions, each group of auxiliary protrusions includes one or more auxiliary protrusions, and in an orientation of an opening of the transmission groove, a height of each auxiliary protrusion is less than a height of each split protrusion. In the arrangement direction of the two split protrusions, one group of auxiliary protrusions and the one split protrusion are adjacently arranged, the other group of auxiliary protrusions and the other split protrusion are adjacently arranged, and a spacing between the one group of auxiliary protrusions and the other group of auxiliary protrusions is less than the spacing between the two split protrusions.

In this implementation, the one split protrusion, the one group of auxiliary protrusions, the other group of auxiliary protrusions, and the other split protrusion are sequentially arranged in the arrangement direction of the two split protrusions, the two split protrusions are configured to abut against the two sides of the friction plate, and the two groups of auxiliary protrusions are configured to split driving forces in regions between the middle part and the two sides of the split piston. The two groups of auxiliary protrusions are configured to cooperate with the two split protrusions to jointly push the same friction plate to brake the wheel, to improve distribution of pressure applied to the friction plate, so that a force applied to the friction plate is more even.

In an implementation, an arrangement direction of a group of auxiliary protrusions is perpendicular to the arrangement direction of the two split protrusions.

In an implementation, auxiliary protrusions are in different shapes.

In an implementation, the other end face includes a central groove, an orientation of an opening of the central groove is opposite to the orientation of the opening of the transmission groove, a depth of the central groove is less than a depth of the transmission groove, and the central groove is provided between the two split protrusions.

In this implementation, the central groove is configured to reduce a contact area between a middle part of the other end face and the friction plate, to avoid a case in which a force applied to the friction plate is uneven because two ends of the other end face in the arrangement direction of the two split protrusions are warped after pressure is concentrated in the middle part of the other end face.

In an implementation, a groove bottom of the central groove communicates with a groove bottom of the transmission groove.

In this implementation, an inner diameter of the central groove is less than the inner diameter of the transmission groove and less than an outer diameter of the ball screw. The transmission groove communicates with an external environment through the central groove. This facilitates heat dissipation of the ball screw, and avoids impact on running of the ball screw due to a difference between internal pressure and external pressure of the transmission groove. Communication between the central groove and the transmission groove also facilitates processing of the split piston.

In an implementation, each split protrusion includes a pressure reduction groove, and an orientation of an opening of each pressure reduction groove is opposite to the orientation of the opening of the transmission groove.

In this implementation, each pressure reduction groove is configured to reduce a contact area between a middle part of the corresponding split protrusion and the friction plate, to ensure that an edge of each split protrusion is in contact with the friction plate, and avoid a case in which a pushing force of an edge of a split protrusion is reduced because pressure applied by the split protrusion to the friction plate is concentrated in a middle part of the split protrusion.

In an implementation, an inner diameter of each pressure reduction groove is less than the inner diameter of the central groove.

In this implementation, an area of each split protrusion is smaller than an area of a middle part between the two split protrusions. Therefore, an area, of a contact area between each split protrusion and the friction plate, reduced by using the corresponding pressure reduction groove is smaller than an area, of a contact area between the friction plate and a middle part of a second end face between the two split protrusions, reduced by using the central groove.

In an implementation, the electro-mechanical brake apparatus includes a caliper body, the caliper body is configured to fasten the brake motor, the reducer, and the ball screw, the caliper body includes one group of limiting structures arranged around the ball screw, the one end face includes another group of limiting structures arranged around the transmission groove, and the one group of limiting structures and the another group of limiting structures include a plurality of limiting protrusions and a plurality of limiting grooves.

In this implementation, the caliper body includes an accommodation groove, and the accommodation groove is configured to at least partially accommodate the ball screw and the split piston. An axis of the accommodation groove coincides with the axis of the ball screw. In a circumferential direction of the ball screw, a groove wall of the accommodation groove includes one group of limiting structures. In the circumferential direction of the ball screw, the one end face that is of the split piston and that is accommodated in a first accommodation groove includes another group of limiting structures. The one group of limiting structures cooperates with the another group of limiting structures to limit rotation of the split piston, and the split piston may slide relative to the caliper body in the axial direction of the ball screw. Further, limitation on the rotation of the split piston ensures that the arrangement direction of the two split protrusions corresponds to the length direction of the friction plate.

In an implementation, the transmission groove is in transmission connection to the other end of the ball screw through a nut. An outer circumferential surface of the nut includes an annular protrusion, and an outer diameter of the annular protrusion is greater than the inner diameter of the transmission groove. The nut is divided into a screw transmission section and a piston transmission section in an axial direction of the nut with the annular protrusion as a dividing line, a length of the screw transmission section is greater than a length of the piston transmission section, an inner circumferential surface of the screw transmission section includes one section of thread, the one section of thread is configured to engage with a thread on an outer circumferential surface of the other end of the ball screw, and the piston transmission section is configured to be embedded in the transmission groove.

In this implementation, the annular protrusion is configured to abut against the one end face of the split piston, to transfer the driving force of the ball screw to the split piston through the one end face. The nut is configured to at least partially accommodate the ball screw. The inner circumferential surface of the screw transmission section is connected to an outer circumferential surface of the ball screw through the thread, to transform rotation of the ball screw driven by the brake motor through the reducer into displacement of the nut in the axial direction of the ball screw. The nut drives, through the annular protrusion, the split piston to slide in the axial direction of the ball screw.

In an implementation, an outer circumferential surface of the piston transmission section includes another section of thread, the another section of thread is configured to engage with a thread on an inner groove wall of the transmission groove, and a length of the another section of thread is less than a length of the one section of thread.

In this implementation, the outer circumferential surface of the piston transmission section is connected to the inner groove wall of the transmission groove through the thread, so that the nut is fastened to the split piston. The transmission groove is configured to accommodate the piston transmission section, to compress an axial dimension of the electro-mechanical brake apparatus.

In an implementation, a pitch of the another section of thread is less than a pitch of the one section of thread.

In this implementation, the pitch of the another section of thread is reduced, to improve strength of connection between the piston transmission section and the transmission groove, to implement reliable transfer of a driving force.

In an implementation, the screw transmission section is configured to be embedded in the caliper body, an outer circumferential surface of the screw transmission section includes an annular groove, the annular groove is configured for a sealing circle to be embedded in, and the sealing circle is configured to seal a gap between the screw transmission section and the caliper body.

In this implementation, an axis of the sealing circle coincides with the axis of the ball screw. In a radial direction of the ball screw, an outer circumferential surface of the sealing circle is configured to abut against the groove wall of the accommodation groove of the caliper body, and an inner circumferential surface of the sealing circle is configured to abut against a groove bottom of the annular groove, to seal a gap between the screw transmission section and the groove wall of the accommodation groove.

In an implementation, the transmission groove is configured to be in direct transmission connection to the other end of the ball screw. A thread on an inner groove wall of the transmission groove is configured to engage with a thread on an outer circumferential surface of the other end of the ball screw.

In this implementation, the transmission groove is configured to accommodate an end that is of the ball screw and that is away from the brake motor. In a radial direction of the ball screw, an outer circumferential surface of the ball screw is configured to engage with the inner groove wall of the transmission groove, to directly transform rotation of the ball screw driven by the brake motor through the reducer into displacement of the split piston in the axial direction of the ball screw.

In an implementation, a length of the thread on the inner groove wall of the transmission groove is less than the depth of the transmission groove.

In this implementation, the ball screw rotates forward to drive the groove bottom of the transmission groove to slide away from the ball screw, until the split piston drives the corresponding friction plate to be in contact with the brake disc. In this case, the electro-mechanical brake apparatus implements braking. The ball screw rotates in reverse to drive the groove bottom of the transmission groove to slide toward the ball screw, until the groove bottom of the transmission groove abuts against the ball screw. In this case, the electro-mechanical brake apparatus terminates the braking.

In an implementation, the depth of the transmission groove is greater than a spacing between the two end faces.

In this implementation, the transmission groove includes an extension section, the extension section extends away from the one end face of the split piston in the axial direction of the ball screw, and the extension section is configured to extend into the accommodation groove of the caliper body. In the radial direction of the ball screw, the accommodation groove, the extension section, and the other end of the ball screw are sequentially sleeved. An outer diameter of the extension section is equal to an inner diameter of the accommodation groove, to implement radial positioning of the split piston.

In an implementation, the transmission groove is configured to be embedded in the caliper body, an outer groove wall of the transmission groove includes an annular groove, the annular groove is configured for a sealing circle to be embedded in, and the sealing circle is configured to seal a gap between the outer groove wall of the transmission groove and the caliper body.

In this implementation, an axis of the sealing circle coincides with the axis of the ball screw. In the radial direction of the ball screw, an outer circumferential surface of the sealing circle is configured to abut against the groove wall of the accommodation groove of the caliper body, and an inner circumferential surface of the sealing circle is configured to abut against a groove bottom of the annular groove, to seal a gap between the outer groove wall of the transmission groove and the groove wall of the accommodation groove.

According to a second aspect, this application provides a vehicle, including a plurality of wheels and a plurality of electro-mechanical brake apparatuses provided in the first aspect. Each electro-mechanical brake apparatus is configured to brake one wheel.

Because the electro-mechanical brake apparatus provided in the first aspect of this application makes pressure applied to the friction plate more even and improves braking efficiency, braking efficiency of the vehicle provided in the second aspect of this application is also improved.

### BRIEF DESCRIPTION OF DRAWINGS

To describe technical solutions in this application more clearly, the following briefly describes accompanying drawings for describing implementations. Clearly, the accompanying drawings in the following descriptions are merely some implementations of this application, and a person of ordinary skill in the art may still derive other drawings from these accompanying drawings without creative efforts.
FIG. 1 is a diagram of a partial appearance structure of a wheel of a vehicle according to an embodiment of this application;
FIG. 2 is a diagram of a partial cross-sectional structure of a wheel of a vehicle according to an embodiment of this application;
FIG. 3 is a diagram of a cross-sectional structure of an electro-mechanical brake apparatus according to an embodiment of this application;
FIG. 4 is a diagram of a cross-sectional structure of a caliper body in an electro-mechanical brake apparatus according to an embodiment of this application;
FIG. 5 is a diagram of a cross-sectional structure of components inside a housing in an electro-mechanical brake apparatus according to an embodiment of this application;
FIG. 6 is a diagram of a partial structure of components inside a caliper body in an electro-mechanical brake apparatus according to an embodiment of this application;
FIG. 7 is a diagram of a partial enlarged structure of components inside a caliper body in an electro-mechanical brake apparatus according to an embodiment of this application;
FIG. 8 is a diagram of a connection structure of a split piston and a ball screw in an electro-mechanical brake apparatus according to an embodiment of this application;
FIG. 9 is a diagram of an appearance structure of a second end face of a split piston in an electro-mechanical brake apparatus according to an embodiment of this application;
FIG. 10 is a diagram of an appearance structure of a first end face of a split piston in an electro-mechanical brake apparatus according to an embodiment of this application;
FIG. 11 is a diagram of a structure of a second end face of a split piston in an electro-mechanical brake apparatus according to an embodiment of this application;
FIG. 12 is a diagram of a structure of a second end face of a split piston in an embodiment of an electro-mechanical brake apparatus according to an embodiment of this application;
FIG. 13 is a diagram of a structure of a second end face of a split piston in an electro-mechanical brake apparatus according to an embodiment of this application;
FIG. 14 is a diagram of a structure of a second end face of a split piston in another embodiment of an electro-mechanical brake apparatus according to an embodiment of this application;
FIG. 15 is a diagram of a partial cross-sectional structure of a caliper body in an electro-mechanical brake apparatus according to an embodiment of this application;
FIG. 16 is a diagram of a connection structure of a split piston and a nut in an electro-mechanical brake apparatus according to an embodiment of this application;
FIG. 17 is a diagram of an appearance structure of a nut in an electro-mechanical brake apparatus according to an embodiment of this application;
FIG. 18 is a diagram of a partial cross-sectional structure of components inside a caliper body in an electro-mechanical brake apparatus according to an embodiment of this application;
FIG. 19 is a diagram of a partial enlarged structure of components inside a caliper body in an electro-mechanical brake apparatus according to an embodiment of this application;
FIG. 20 is a diagram of a connection structure of a split piston and a ball screw in an electro-mechanical brake apparatus according to an embodiment of this application; and
FIG. 21 is a diagram of an appearance structure of a split piston in an electro-mechanical brake apparatus according to an embodiment of this application.

### DESCRIPTION OF EMBODIMENTS

The following describes technical solutions in embodiments of this application with reference to accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of this application.

This application provides a split-type electro-mechanical brake apparatus. The electro-mechanical brake apparatus includes a brake motor, a reducer, a ball screw, and a split piston, one end of the ball screw is configured to be in transmission connection to the brake motor through the reducer, the other end of the ball screw is configured to drive the split piston, and the split piston is configured to split a received driving force through two split protrusions, to push a same friction plate jointly through the two split protrusions to brake a wheel. The split piston includes two end faces that face away from each other, one end face includes a transmission groove, and the transmission groove is configured to be in transmission connection to the other end of the ball screw. The two split protrusions are arranged at a spacing on the other end face, and in an arrangement direction of the two split protrusions, a length of the other end face is greater than a length of the one end face, and the spacing between the two split protrusions is less than or equal to an inner diameter of the transmission groove.

In the electro-mechanical brake apparatus provided in this application, the two split protrusions are disposed on the other end face having a longer dimension, to split a driving force transferred by the ball screw to the split piston, so that pressure applied to the friction plate is more even. This improves braking efficiency of the electro-mechanical brake apparatus.

This application provides a vehicle, including a plurality of wheels and a plurality of electro-mechanical brake apparatuses provided in this application. Each electro-mechanical brake apparatus is configured to brake one wheel.

The vehicle provided in this application has higher braking efficiency, better braking effect, and a longer service life.

The vehicle provided in this application may include a plurality of electro-mechanical brake apparatuses, and each electro-mechanical brake apparatus is disposed corresponding to one wheel. The vehicle further includes a brake pedal, and the brake pedal is configured to control the plurality of electro-mechanical brake apparatuses to drive friction plates to move toward or away from brake discs of wheels.

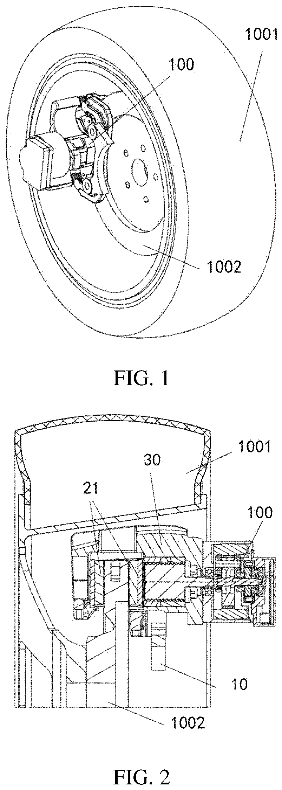

FIG. 1 is a diagram of a partial appearance structure of a wheel of a vehicle according to an embodiment of this application.

As shown in FIG. 1, a brake disc 1002 is disposed on a wheel 1001, and the brake disc 1002 is coaxially fastened with a hub of the wheel 1001. The wheel 1001 rotates relative to a frame, and the brake disc 1002 synchronously rotates with the wheel 1001 relative to the frame. As shown in FIG. 1, an outer diameter dimension of the brake disc 1002 is smaller than an inner diameter dimension of an inner rim of the wheel, and the brake disc 1002 is accommodated in the inner rim of the wheel 1001.

An electro-mechanical brake apparatus 100 provided in this application is fastened to the frame, and the electro-mechanical brake apparatus 100 at least partially extends into the inner rim of the wheel 1001, and cooperates with the brake disc 1002 to brake the wheel 1001.

FIG. 2 is a diagram of a partial cross-sectional structure of a wheel of a vehicle according to an embodiment of this application.

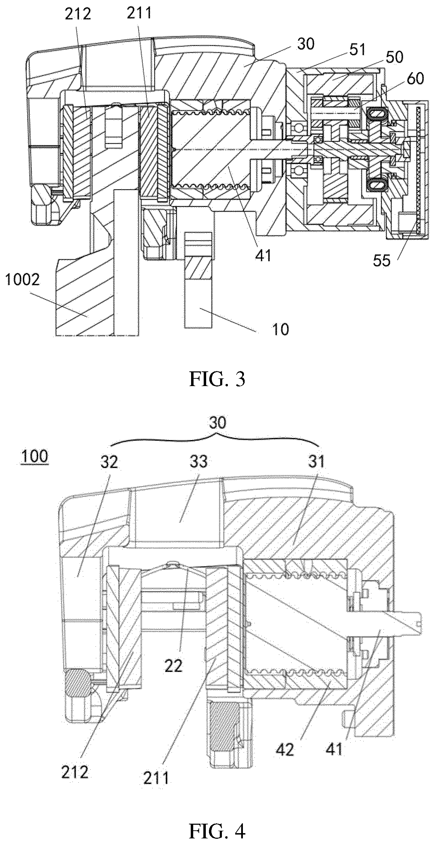

As shown in FIG. 2, the electro-mechanical brake apparatus 100 provided in this application includes a caliper bracket 10, friction plates 21, a caliper body 30, a ball screw 41, and a brake motor 50. For connection relationships between the ball screw 41, the brake motor 50, and the caliper body 30, refer to FIG. 3. The caliper bracket 10 is configured to be in fixed connection to the frame, the caliper body 30 is slidably connected to the caliper bracket 10, and the brake motor 50 is fastened to the caliper body 30 and synchronously slides with the caliper body 30 relative to the caliper bracket 10. In some embodiments, the caliper body 30 is slidably connected to the caliper bracket 10 through a through hole and a sliding rod. To be specific, the caliper body 30 is provided with one of the through hole and the sliding rod, and the caliper bracket 10 is provided with the other one of the through hole and the sliding rod. The sliding rod axially slides in the through hole, to implement relative sliding between the caliper body 30 and the caliper bracket 10.

In embodiments of this application, a sliding direction of the caliper body 30 relative to the caliper bracket 10 is parallel to an axial direction of the brake disc 1002. In other words, an axial direction of the brake motor 50 in the electro-mechanical brake apparatus 100 is parallel to an axial direction of the wheel 1001, and the brake motor 50 is configured to slidably connect to the frame in the axial direction of the wheel 1001. In correspondence to the embodiment of cooperation between the through hole and the sliding rod, both an axial direction of the through hole and an axis of the sliding rod are parallel to the axial direction of the brake disc 1002.

The caliper body 30 is configured to: mount the friction plates 21, be in fixed connection to the brake motor 50, and partially accommodate the ball screw 41. As shown in FIG. 2, there are two friction plates 21, and the two friction plates 21 are respectively arranged on two sides of the brake disc 1002 in the axial direction of the brake disc 1002. The two friction plates 21 respectively face two outer surfaces of the brake disc 1002 that face away from each other.

As shown in FIG. 2, the brake motor 50 in the electro-mechanical brake apparatus 100 is configured to drive the two friction plates 21 to slide in the axial direction of the wheel 1001 to abut against the brake disc 1002. In this embodiment, the brake motor 50 is configured to drive the friction plates 21 to move toward or away from the brake disc 1002 of the vehicle. The brake motor 50 drives the ball screw 41 to rotate relative to the caliper bracket 10, to push the two friction plates 21 to slide toward each other and to be in contact with the two outer surfaces of the brake disc 1002 that face away from each other, to generate a friction force to brake the brake disc 1002.

For ease of description, in this application, in the axial direction of the brake disc 1002, a friction plate 21 in the two friction plates 21 that is close to the ball screw 41 is defined as a first friction plate 211, and a friction plate 21 in the two friction plates 21 that is away from the ball screw 41 is defined as a second friction plate 212.

FIG. 3 is a diagram of a cross-sectional structure of the electro-mechanical brake apparatus 100 according to an embodiment of this application.

As shown in FIG. 3, the electro-mechanical brake apparatus 100 in this application further includes a caliper body 30, the ball screw 41, and the brake motor 50. An axis of the ball screw 41 is parallel to an axis of the brake disc 1002. In an axial direction of the ball screw 41, the caliper body 30 is close to the wheel 1001 relative to the brake motor 50. The caliper body 30 is configured to be in fixed connection to the brake motor 50, and is configured to partially accommodate the ball screw 41. In an embodiment, the electro-mechanical brake apparatus 100 in this application further includes a reducer 60. The reducer 60 is configured to be in transmission connection to the brake motor 50 and the ball screw 41. The reducer 60 is configured to adjust a rotational speed and torque of a driving force output by the brake motor 50, and transfer an adjusted driving force to the ball screw 41.

The ball screw 41 is configured to be in transmission connection to the brake motor 50, and is configured to drive the two friction plates 21. Specifically, the two friction plates 21 are configured to slidably connect to the caliper bracket 10, the ball screw 41 is configured to drive the first friction plate 211 to slide relative to the caliper bracket 10, and the second friction plate 212 is configured to be in fixed connection to or slidably connect to the caliper body 30. In other words, the second friction plate 212, the first friction plate 211, the ball screw 41, and the brake motor 50 are sequentially arranged in the axial direction of the ball screw 41.

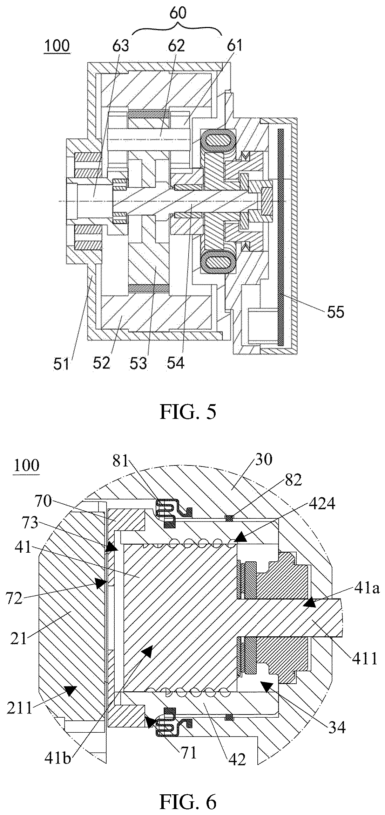

In this embodiment, the brake motor 50 includes a housing 51, and the housing 51 is in fixed connection to the caliper body 30 in the axial direction of the brake motor 50. Refer to FIG. 5. The housing 51 is configured to fasten a stator 52 of the brake motor 50. An inner cavity of the housing 51 is configured to accommodate the stator 52 and a rotor 53 of the brake motor 50. In some embodiments, the housing 51 of the brake motor 50 is further configured to accommodate a gear set 61 of the reducer 60. In other words, the gear set 61 of the reducer 60 is integrated in the housing 51 of the brake motor 50, so that internal mechanisms of the electro-mechanical brake apparatus 100 are arranged more compactly, to reduce an overall volume. The caliper body 30 is configured to partially accommodate the ball screw 41. The caliper body 30 is further configured to drive the housing 51, and slide relative to the caliper bracket 10 in the axial direction of the brake disc 1002. The reducer 60 is configured to be in transmission connection to the ball screw 41 and the brake motor 50. The brake motor 50 is configured to drive the reducer 60 to rotate to push the friction plates 21 and drive the caliper body 30.

FIG. 4 is a diagram of a cross-sectional structure of the caliper body 30 in the electro-mechanical brake apparatus 100 according to an embodiment of this application.

As shown in FIG. 4, the caliper body 30 is approximately U-shaped, and the caliper body 30 includes a main portion 31, a pushing portion 32, and a connection portion 33. The main portion 31 and the pushing portion 32 are respectively arranged on two sides of the brake disc 1002 in the axial direction of the brake disc 1002, and the main portion 31 and the pushing portion 32 are further respectively arranged on two sides of the two friction plates 21 in the axial direction of the brake disc 1002. The connection portion 33 is located on an outer side of the brake disc 1002 in a radial direction of the brake disc 1002, and the connection portion 33 is configured to be in fixed connection to the main portion 31 and the pushing portion 32.

In an embodiment, the first friction plate 211 is mounted on a surface that is of the main portion 31 and that faces the pushing portion 32. The electro-mechanical brake apparatus 100 in this application further includes a split piston 70. In the axial direction of the brake disc 1002, the split piston 70 is located on a side that is of the first friction plate 211 and that is away from the brake disc 1002, and the split piston 70 is configured to abut against the first friction plate 211. The second friction plate 212 is mounted on a surface that is of the pushing portion 32 and that faces the main portion 31.

In an embodiment, the first friction plate 211 is slidably connected to the main portion 31. In an embodiment, the second friction plate 212 is in fixed connection to the pushing portion 32.

The main portion 31 is further configured to slidably connect to the caliper bracket 10. The ball screw 41 is accommodated in an accommodation groove of the main portion 31. The housing 51 is fastened on a side that is of the main portion 31 and that is away from the pushing portion 32. In the axial direction of the brake disc 1002, one end of the ball screw 41 is configured to be in transmission connection to the reducer 60, and the other end of the ball screw 41 is configured to drive the split piston 70. For ease of description, an end that is of the ball screw 41 and that is in transmission connection to the reducer 60 is defined as a first end 41a, and an end that is of the ball screw 41 and that is away from the reducer 60 is defined as a second end 41b.

Each of the main portion 31 and the housing 51 is provided with a through hole. In an embodiment, the through hole is configured to avoid a transmission shaft 411 disposed at the first end 41a of the ball screw 41. In other words, the transmission shaft 411 of the ball screw 41 passes through two through holes and extends into the housing 51 to be in transmission connection to the reducer 60.

In some other embodiments, the through hole is configured to avoid an output shaft of the reducer 60. In other words, the output shaft of the reducer 60 passes through the two through holes and extends into the accommodation groove of the main portion 31 to be in fixed connection to the first end 41a of the ball screw 41.

In an embodiment, with reference to FIG. 5, the brake motor 50 further includes a motor shaft 54, an axis of the motor shaft 54 coincides with the axis of the ball screw 41, the motor shaft 54 is configured to be coaxially fastened with the rotor 53 of the brake motor 50, and the motor shaft 54 is further configured to be coaxially fastened with the output shaft of the reducer 60.

In embodiments of this application, the stator 52 of the brake motor 50 is further configured to electrically connect to an external circuit. When the electro-mechanical brake apparatus 100 in this application works, an alternating current of the external circuit can enable the stator 52 to generate an alternating magnetic field, and the rotor 53 rotates around the axial direction of the ball screw 41 based on the alternating magnetic field, and drives the motor shaft 54 to synchronously rotate. A rotation direction of the rotor 53 varies according to a voltage phase of the alternating current. In other words, the motor shaft 54 of the brake motor 50 can rotate in one direction to drive the friction plates 21 to implement braking, and the motor shaft 54 of the brake motor 50 can also rotate in another direction to release the friction plates 21 from the brake disc 1002 to terminate the braking. The one direction means that the motor shaft 54 of the brake motor 50 rotates forward, and the another direction means that the motor shaft 54 of the brake motor 50 rotates in reverse.

When the brake motor 50 rotates forward, the reducer 60 drives the ball screw 41 to rotate forward around the axis of the ball screw 41, the ball screw 41 drives the split piston 70 to slide toward the brake disc 1002, and the split piston 70 pushes the friction plate 21 to slide toward the brake disc 1002, until the friction plates 21 are in contact with the brake disc 1002 to implement braking. When the brake motor 50 rotates in reverse, the reducer 60 drives the ball screw 41 to rotate in reverse around the axis of the ball screw 41, the ball screw 41 drives the split piston 70 to slide away from the brake disc 1002, and the friction plates 21 are released from the brake disc 1002.

In some embodiments, a separation spring 22 is further disposed between the two friction plates 21, two opposite ends of the separation spring 22 respectively abut against the two friction plates 21, and the separation spring 22 is configured to provide an elastic force for the two friction plates 21 to be away from each other in the axial direction of the ball screw 41, to ensure that after the split piston 70 slides away from the brake disc 1002, the two friction plates 21 are released from the brake disc 1002 to terminate braking.

FIG. 5 is a diagram of a cross-sectional structure of components inside the housing 51 in the electro-mechanical brake apparatus according to an embodiment of this application.

As shown in FIG. 5, in an embodiment, the stator 52 and the rotor 53 are coaxially arranged in a radial direction of the brake motor 50. The stator 52 is configured to drive the rotor 53 to rotate, to output power. The brake motor 50 further includes a motor shaft 54, and the motor shaft 54 is coaxially fastened with the rotor 53.

In the embodiment shown in FIG. 5, the brake motor 50 is an inner rotor motor, the stator 52 is coaxially sleeved on an outer side of the rotor 53, and the rotor 53 is located in a center hole of the stator 52. In this case, the housing 51 is configured to fasten the stator 52, and the stator 52 drives the rotor 53 to rotate in the center hole of the stator 52. In some other embodiments, the brake motor 50 is an outer rotor motor, the rotor 53 is coaxially sleeved on an outer side of the stator 52, and the stator 52 is located in a center hole of the rotor 53. In this case, a structure of a support cylinder is disposed in the housing 51, the support cylinder is configured to fasten the stator 52, and the stator 52 drives the rotor 53 to rotate on the outer side of the stator 52.

The reducer 60 includes an output shaft 62, a drive shaft 63, and the gear set 61. The output shaft 62 is in transmission connection to the drive shaft 63 through the gear set 61. The output shaft 62 is configured to be in transmission connection to the brake motor 50. The drive shaft 63 is configured to be in transmission connection to the first end 41a of the ball screw 41. The output shaft 62 of the reducer 60 is configured to be in transmission with the motor shaft 54 of the brake motor 50. The drive shaft 63 of the reducer 60 is configured to be in coaxial transmission with the first end 41a of the ball screw 41.

The gear set 61 is configured to adjust a rotational speed and torque of a driving force output by the motor shaft 54 of the brake motor 50. In some embodiments, in the reducer 60, an axis of the output shaft 62 is offset from an axis of the drive shaft 63 in the radial direction of the brake motor 50. The gear set 61 has a relatively compact structure, and can provide a high reduction ratio. This facilitates miniaturization of a drive mechanism in this application.

As shown in FIG. 3 and FIG. 5, the reducer 60 is a coaxial reducer, and the gear set 61 is a planetary gear set. Such a structure can reduce a volume of the reducer 60. The output shaft 62 of the reducer 60 is in transmission connection to the motor shaft 54 of the brake motor 50 through the planetary gear set. In this case, the motor shaft 54 and the output shaft 62 are arranged at a spacing in the axial direction of the brake motor 50. In some other embodiments, the gear set 61 of the reducer 60 is a parallel shaft gear set, and in this case, the output shaft 62 of the reducer 60 is in coaxial transmission with the motor shaft 54 of the brake motor 50. The foregoing implementations do not affect function implementation of the electro-mechanical brake apparatus 100 in this application.

When the vehicle needs to be braked, the stator 52 of the brake motor 50 drives the rotor 53 to drive the motor shaft 54 to rotate forward. The motor shaft 54 drives the output shaft 62 that is of the reducer 60 and that is in transmission connection to the motor shaft 54 to synchronously rotate forward. The output shaft 62 drives, through the gear set 61, the drive shaft 63 to rotate forward. The drive shaft 63 drives the ball screw 41 to synchronously rotate forward. The ball screw 41 transforms a rotation action of the ball screw 41 into a sliding action of the split piston 70. In other words, the ball screw 41 drives the split piston 70 to slide along the axis of the ball screw 41. A sliding direction of the ball screw 41 points toward the brake disc 1002, and the split piston 70 pushes the first friction plate 211 to move toward the brake disc 1002, so that the first friction plate 211 is in contact with the brake disc 1002 to generate a friction force.

After the first friction plate 211 is in contact with and abuts against the brake disc 1002, the stator 52 of the brake motor 50 continues to drive the rotor 53 to rotate forward. With the same power transfer path, the split piston 70 continues to slide in the axial direction of the ball screw 41. Because a position of the brake disc 1002 is fixed, and the split piston 70, the first friction plate 211, and the brake disc 1002 sequentially abut against each other, the split piston 70 receives a reverse pushing force of the brake disc 1002 and transfers the force to the ball screw 41, and the ball screw 41 transforms a driving force transferred by the brake motor 50 into an action of reversely pushing the caliper body 30 to slide relative to the caliper bracket 10. In other words, after the first friction plate 211 is in contact with and abuts against the brake disc 1002, the ball screw 41 rotates to further increase a length of the ball screw 41, and reversely pushes the caliper body 30 to slide relative to the caliper bracket 10 toward the housing 51. The housing 51 synchronously slides away from the brake disc 1002 with the caliper body 30.

The sliding of the caliper body 30 toward the housing 51 may drive the pushing portion 32 to synchronously slide toward the housing 51. Because the pushing portion 32 is located on a side that is of the brake disc 1002 and that faces away from the housing 51, a sliding direction of the pushing portion 32 points toward the brake disc 1002. In other words, after the first friction plate 211 is in contact with and abuts against the brake disc 1002, the ball screw 41 further drives the pushing portion 32 to slide toward the brake disc 1002. In this case, the pushing portion 32 can drive the second friction plate 212 to synchronously slide toward the brake disc 1002, until the second friction plate 212 is in contact with the brake disc 1002 to generate a friction force.

In this way, the ball screw 41 drives the two friction plates 21 located on the two sides of the brake disc 1002 to slide toward each other and to be respectively in contact with the two outer surfaces of the brake disc 1002 that face away from each other, to generate a friction force to brake the brake disc 1002, to implement braking of the vehicle.

After the braking is completed, the stator of the brake motor 50 drives the rotor 53 to rotate in reverse. The rotor 53 sequentially drives the output shaft 62 of the reducer 60, the drive shaft 63, and the ball screw 41 to synchronously rotate in reverse. The ball screw 41 may rotate in reverse to drive the split piston 70 to slide away from the brake disc 1002, to increase a spacing between the two friction plates 21. Under an action of the separation spring 22, the two friction plates 21 are released from the brake disc 1002 to terminate the braking, so that the wheel 1001 can continue to rotate and drive the vehicle to travel.

In an embodiment, with reference to FIG. 6, the electro-mechanical brake apparatus 100 in this application further includes a nut 42. The nut 42 is coaxially sleeved on an outer side of the second end 41b of the ball screw 41, and the first end 41a of the ball screw 41 is configured to be in coaxial transmission with an output shaft of the reducer 60. The output shaft of the reducer 60 drives the ball screw 41 to rotate, to drive the nut 42 to slide.

A thread on an inner circumferential surface of the nut 42 is configured to engage with a thread on an outer circumferential surface of the second end 41b of the ball screw 41. When the ball screw 41 is driven by the reducer 60 to rotate around the axis of the ball screw 41, the ball screw 41 may drive the nut 42 to slide along the axis of the ball screw 41. On a side that is of the nut 42 and that is away from the reducer 60, the nut 42, the split piston 70, the first friction plate 211, and the brake disc 1002 are sequentially arranged along the axis of the ball screw 41. The ball screw 41 may drive the nut 42 to slide along the axis of the ball screw 41, to drive the friction plates 21 to move relative to the brake disc 1002.

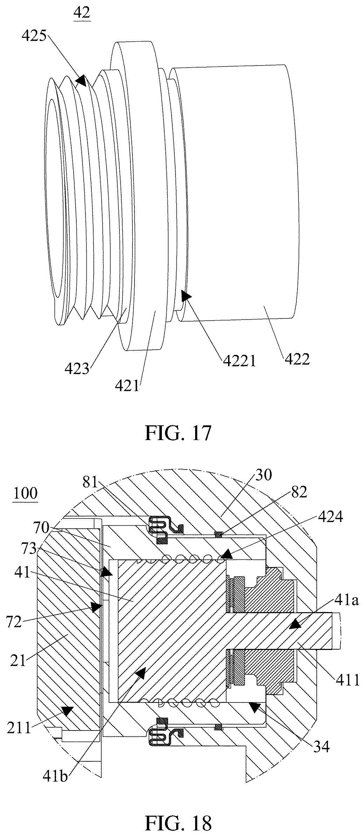

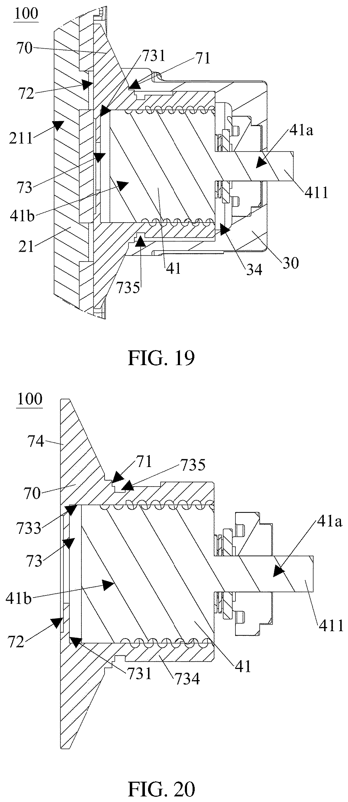

In another embodiment, with reference to FIG. 18 and FIG. 19, in the axial direction of the ball screw 41, a transmission groove 73 is provided on an end face that is of the split piston 70 and that faces the brake motor 50, and the transmission groove 73 is configured to accommodate the second end 41b of the ball screw 41. A thread on an inner groove wall 733 of the transmission groove 73 is configured to engage with a thread on the outer circumferential surface of the second end 41b of the ball screw 41. When the ball screw 41 is driven by the reducer 60 to rotate around the axis of the ball screw 41, the ball screw 41 may directly drive the split piston 70 to slide along the axis of the ball screw 41, and drive the friction plates 21 to move relative to the brake disc 1002.

In some embodiments, the electro-mechanical brake apparatus 100 includes a reset spring, and the reset spring is disposed between the caliper body 30 and the caliper bracket 10. For ease of description of an overall structure, the reset spring is not shown in the figure. The reset spring is configured to drive the caliper body 30 to slide relative to the caliper bracket 10 away from the housing 51, to drive the pushing portion 32 to slide away from the brake disc 1002, to ensure that the two friction plates 21 are reliably separated from the brake disc 1002.

In this way, after braking is completed, the ball screw 41 drives the friction plates 21 located on the two sides of the brake disc 1002 to slide away from each other and to be respectively released from the two outer surfaces of the brake disc 1002 that face away from each other to terminate the braking, so that the wheel 1001 can continue to rotate and drive the vehicle to travel.

In an embodiment, the brake motor 50 further includes a circuit board 55. The circuit board 55 is configured to fasten a drive circuit, and the drive circuit is configured to drive the stator 52 of the brake motor 50. Both the circuit board 55 and the brake motor 50 are accommodated in the inner cavity of the housing 51, so that a signal transmission distance between the drive circuit and the stator 52 of the brake motor 50 can be shortened, and internal line arrangement of the brake motor 50 can be simplified. In addition, the housing 51 can provide reliable sealing protection effect for the circuit board 55.

In an embodiment, the electro-mechanical brake apparatus 100 in this application further includes a position sensor. The position sensor is configured to detect a rotation angle of the motor shaft 54 of the brake motor 50, to adjust a driving force of the brake motor 50. The position sensor includes a stator and a rotor, the stator of the position sensor is fastened to the housing 51, and the rotor of the position sensor is in coaxial transmission with the motor shaft 54 of the brake motor 50 or the output shaft 62 of the reducer 60. The stator of the position sensor is directly fastened to the housing 51. In another embodiment, the stator of the position sensor is fastened to the circuit board 55 and indirectly fastened to the housing 51 through the circuit board 55. The rotor of the position sensor is in coaxial transmission with the motor shaft 54 of the brake motor 50 or the drive shaft 63 of the reducer 60.

Through cooperation between the stator and the rotor of the position sensor, a rotation angle of the motor shaft 54 of the brake motor 50 or the drive shaft 63 of the reducer 60 in the inner cavity of the housing 51 may be detected. The position sensor is further in communication connection to the drive circuit on the circuit board 55. The drive circuit receives an angle signal detected by the position sensor, and calculates a rotation angle of the rotor 53 in the brake motor 50, to adjust a driving force of the brake motor 50, that is, adjust braking intensity of the vehicle.

In an embodiment, a drive mechanism includes a locking mechanism. The locking mechanism is configured to lock or release the motor shaft 54 of the brake motor 50, or the locking mechanism is configured to lock or release the drive shaft 63 of the reducer 60, so that the drive mechanism in this application further has a parking function. Specifically, in an embodiment, a part of the locking mechanism is fastened to the housing 51, and another part of the locking mechanism acts on the motor shaft 54 of the brake motor 50 or the drive shaft 63 of the reducer 60. When the friction plates 21 of the electro-mechanical brake apparatus 100 abut against the brake disc 1002, the locking mechanism may be used to lock the motor shaft 54 of the brake motor 50 or the drive shaft 63 of the reducer 60, to maintain a state in which the friction plates 21 abut against the brake disc 1002. The brake disc 1002 no longer rotates, and the vehicle enters a parking state.

In the electro-mechanical brake apparatus 100 in this application, the split piston 70 is configured to transfer, to the first friction plate 211, a driving force transferred by the ball screw 41. The split piston 70 includes two end faces that face away from each other in the axial direction of the ball screw 41, one end face includes a transmission groove 73, and two split protrusions 74 are arranged at a spacing on the other end face. For ease of description, the end face of the split piston 70 on which the transmission groove 73 is provided is defined as a first end face 71, and the end face of the split piston 70 on which the split protrusions 74 are disposed is defined as a second end face 72.

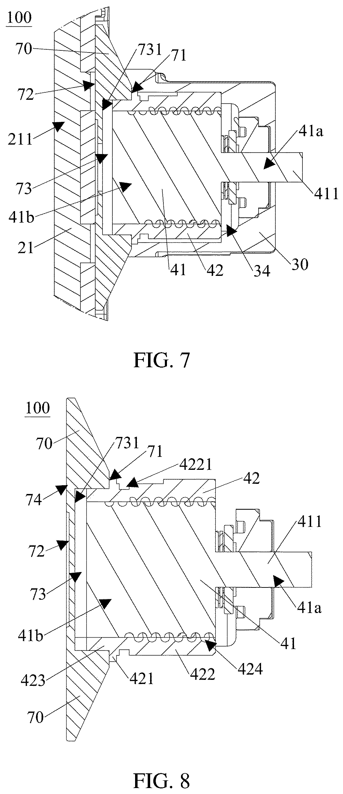

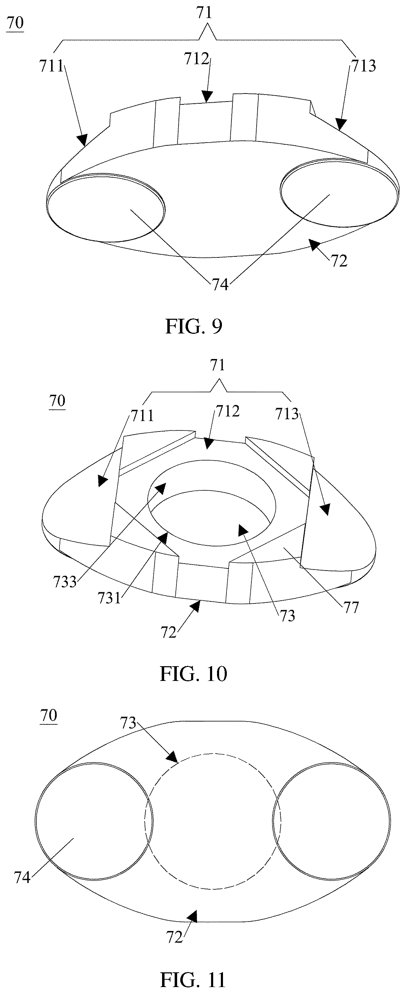

Refer to FIG. 6 to FIG. 9. FIG. 6 is a diagram of a partial cross-sectional structure of components inside the caliper body 30 in the electro-mechanical brake apparatus 100 according to this application. FIG. 7 is a diagram of a partial enlarged cross-sectional structure of components inside the caliper body 30 in the electro-mechanical brake apparatus 100 according to this application. FIG. 8 is a diagram of a connection structure of the split piston 70 and the ball screw 41 in the electro-mechanical brake apparatus 100 according to this application. FIG. 9 is a diagram of an appearance structure of the second end face 72 of the split piston 70 in the electro-mechanical brake apparatus 100 according to this application.

As shown in FIG. 6 to FIG. 9, the first end face 71 faces the brake motor 50 in the axial direction of the ball screw 41, the first end face 71 includes the transmission groove 73, and the transmission groove 73 is configured to be in transmission connection to the second end 41b of the ball screw 41. The second end face 72 faces the first friction plate 211, the two split protrusions 74 are arranged at the spacing on the second end face 72, and the two split protrusions 74 are configured to abut against the first friction plate 211. In embodiments of this application, the split piston 70 is configured to split a received driving force through the two split protrusions 74, to transfer the driving force to the first friction plate 211 more evenly through the second end face 72.

In an embodiment, an axis of the transmission groove 73 coincides with the axis of the ball screw 41, the second end 41b of the ball screw 41 is partially accommodated in the transmission groove 73, and the ball screw 41 transfers a driving force to the second end face 72 of the split piston 70 through a groove bottom 731 of the transmission groove 73. In an arrangement direction of the two split protrusions 74, the axis of the transmission groove 73 is between the two split protrusions 74.

In a working process of the electro-mechanical brake apparatus 100 in this application, the brake motor 50 drives, through the reducer 60, the ball screw 41 to rotate around the axis of the ball screw 41, and the ball screw 41 drives, based on rotation of the ball screw 41, the split piston 70 to slide in the axial direction of the ball screw 41. In this case, the driving force transferred by the ball screw 41 to the split piston 70 is transferred jointly through the second end face 72 and the two split protrusions 74 to a same surface of the first friction plate 211, so that the first friction plate 211 slides toward the brake disc 1002, to implement a braking function of the electro-mechanical brake apparatus 100 in this application.

In a braking process of the electro-mechanical brake apparatus 100, when the driving force of the ball screw 41 is transferred to the second end face 72 of the split piston 70 through the groove bottom 731 of the transmission groove 73, because a middle part of the second end face 72 directly receives the driving force of the ball screw 41, a driving force transferred through the middle part of the second end face 72 to the first friction plate 211 is relatively large. Driving forces transferred through positions at an edge of the second end face 72 are gradually decreased relative to the driving force transferred through the middle part, and consequently, a force applied to the first friction plate 211 is uneven, which affects contact pressure between the first friction plate 211 and the brake disc 1002, and further affects braking effect of the electro-mechanical brake apparatus 100.

The electro-mechanical brake apparatus 100 in this application is provided with the split piston 70, and the split protrusions 74 are disposed in positions at the edge of the second end face 72. The split protrusions 74 are closer to the first friction plate 211 relative to the middle part of the second end face 72 in the axial direction of the ball screw 41, and the middle part of the second end face 72 is deformed in the axial direction of the ball screw 41 under effect of the driving force of the ball screw 41. A deformation amount of the middle part that is of the second end face 72 and that corresponds to the groove bottom 731 of the transmission groove 73 is greater than deformation amounts of two sides of the second end face 72 in the arrangement direction of the two split protrusions 74. Based on abutment between the two split protrusions 74 and the friction plate 21, in a braking process of the electro-mechanical brake apparatus 100, the electro-mechanical brake apparatus 100 in this application may control heights of the two split protrusions 74 in the axial direction of the ball screw 41, to enable the middle part of the second end face 72 of the split piston 70 to abut against the friction plate 21.

In other words, in a braking process of the electro-mechanical brake apparatus 100, the driving force of the ball screw 41 may be transferred through the middle part of the second end face 72 of the split piston 70 to the friction plate 21 while being split through the two split protrusions 74. In this way, a contact area in which the split piston 70 acts on the friction plate 21 is increased, so that a force applied to the friction plate 21 is more even.

In other words, the two split protrusions 74 of the electro-mechanical brake apparatus 100 in this application are disposed, so that pressure applied to two sides of the friction plate 21 is increased, and compensation is implemented for the pressure applied to the two sides of the friction plate 21. In this way, pressure applied to a middle part of the friction plate 21 tends to be consistent with the pressure applied to the two sides of the friction plate 21, to reduce a difference between pressure applied to regions of the friction plate 21. This ensures that the pressure applied to the friction plate 21 is even.

Therefore, in the electro-mechanical brake apparatus 100 in this application, the heights of the two split protrusions 74 in the axial direction of the ball screw 41 are controlled, to ensure that the two split protrusions 74 of the split piston 70 and the middle part of the second end face 72 of the split piston 70 can be simultaneously in contact with the friction plate 21, so that the friction plate 21 can simultaneously receive driving forces transferred through the middle part of the second end face 72 and the two split protrusions 74, and the pressure applied to the two sides of the friction plate 21 tends to be consistent with the pressure applied to the middle part of the friction plate 21. This ensures that the pressure applied to the friction plate 21 is even.

For the friction plate 21, the even pressure applied to the friction plate 21 reduces partial abrasion caused by an excessive partial deformation amount of the friction plate 21 in a braking process, to prolong a service life of the friction plate 21. In addition, the partial abrasion causes a large drag moment and abnormal noise in a process in which the electro-mechanical brake apparatus 100 terminates braking. In addition, the partial abrasion of the friction plate 21 increases maintenance costs, and causes a decrease in a contact area between the friction plate 21 and the brake disc 1002, affecting braking efficiency.

Therefore, in the electro-mechanical brake apparatus 100 in this application, the split piston 70 including the two split protrusions 74 is disposed, so that in a braking process of the electro-mechanical brake apparatus 100 in this application, the split piston 70 can push, under a joint action of the two split protrusions 74 and the middle part of the second end face 72, the first friction plate 211 to slide. In this way, a contact area in which the split piston 70 acts on the friction plate 21 is increased, so that a force applied to the friction plate 21 is even. In this way, deformation amounts of the regions of the friction plate 21 are relatively consistent in a braking process, thereby avoiding the partial abrasion of the friction plate 21. This increases a friction force between the friction plate 21 and the brake disc 1002, and improves braking efficiency and braking effect of the electro-mechanical brake apparatus 100 in this application.

In a braking process of the electro-mechanical brake apparatus 100, the driving force transferred by the ball screw 41 is applied to the first friction plate 211 through the two split protrusions 74, which forms a solution similar to a multi-cylinder braking solution in which two or more pistons are used to simultaneously apply a driving force to a friction plate. Compared with a solution in which two pistons are used in a conventional technology, in this application, disposing of the split piston 70 of the electro-mechanical brake apparatus 100 avoids a case in which a size of the electro-mechanical brake apparatus 100 is increased because a large quantity of pistons need to be disposed, so that an overall volume of the electro-mechanical brake apparatus 100 in this application is effectively controlled while the electro-mechanical brake apparatus 100 implements an even force applied to the friction plate 21.

In an embodiment, in the arrangement direction of the two split protrusions 74, a length of the second end face 72 is greater than a length of the first end face 71. The setting of the length dimension of the second end face 72 increases a contact area between the second end face 72 and the friction plate 21 in a braking process of the electro-mechanical brake apparatus 100. In this way, split effect of the two split protrusions 74 and the middle part of the second end face 72 on a driving force is ensured, so that pressure applied to the first friction plate 211 is more even. This improves braking efficiency and braking effect of the electro-mechanical brake apparatus 100 in this application.

In an embodiment, in the arrangement direction of the two split protrusions 74, the spacing between the two split protrusions 74 is less than or equal to an inner diameter of the transmission groove 73. The middle part that is of the second end face 72 and that corresponds to the groove bottom 731 of the transmission groove 73 is in contact with the first friction plate 211 in a braking process of the electro-mechanical brake apparatus 100, and disposing of the transmission groove 73 makes a thickness dimension of the split piston 70 at the transmission groove 73 in the axial direction of the ball screw 41 relatively small.

In embodiments of this application, in the electro-mechanical brake apparatus 100, the spacing between the two split protrusions 74 is controlled, to reduce a spacing between the two split protrusions 74 and the axis of the transmission groove 73 in the arrangement direction of the two split protrusions 74, to increase the thickness dimension of the split piston 70 at the transmission groove 73 in the axial direction of the ball screw 41, and avoid impact on structure strength of the split piston 70 due to an excessively thin transmission groove 73. This improves structure strength and structure stability of the split piston 70, and prolongs a service life of the electro-mechanical brake apparatus 100 in this application.

In an embodiment, the first friction plate 211, the two split protrusions 74, the ball screw 41, and the brake motor 50 are sequentially arranged in the axial direction of the ball screw 41.

In an embodiment, an area of the first end face 71 is smaller than an area of the second end face 72, and the first end face 71 is inclined relative to the second end face 72.

FIG. 10 is a diagram of an appearance structure of the first end face 71 of the split piston 70 in the electro-mechanical brake apparatus 100 according to this application.

As shown in FIG. 10, in the arrangement direction of the two split protrusions 74, the first end face 71 includes a first surface 711, a second surface 712, and a third surface 713 that are connected. The first surface 711 is inclined relative to the second end face 72. The second surface 712 is parallel to the second end face 72, and an opening 732 of the transmission groove 73 is provided on the second surface 712. The third surface 713 is inclined relative to the second end face 72.

In the axial direction of the ball screw 41, a length of the split piston 70 from the second surface 712 to the second end face 72 is gradually increased due to relative inclination of the first surface 711 and the third surface 713. This ensures that the second end face 72 has a larger length relative to the first end face 71, thereby ensuring split effect of the middle part of the second end face 72 of the split piston 70 and the two split protrusions 74 on the driving force transferred by the ball screw 41.

In addition, the transmission groove 73 is provided on the second surface 712 between the first surface 711 and the third surface 713, and for the second end face 72, a deformation amount of the middle part that is of the second end face 72 and that corresponds to the groove bottom 731 of the transmission groove 73 is greater than deformation amounts of the two sides of the second end face 72. The inclined first surface 711 and the inclined third surface 713 can reduce a self weight of the split piston 70, and can further adjust a height of the split piston 70, so that the split piston 70 corresponding to the second end face 72 with a relatively large deformation amount has a relatively high height, to improve structure strength of the split piston 70. This prolongs the service life of the electro-mechanical brake apparatus 100 in this application.

In an embodiment, an angle of the first end face 71 relative to the second end face 72 ranges from 15 degrees to 25 degrees. In other words, an angle of the first surface 711 relative to the second end face 72 ranges from 15 degrees to 25 degrees, and an angle of the third surface 713 relative to the second end face 72 ranges from 15 degrees to 25 degrees.

On the basis of ensuring structure stability of the split piston 70 through the inclined first surface 711 and the inclined third surface 713 in the electro-mechanical brake apparatus 100 in this application, when angles of the first surface 711 and the third surface 713 relative to the second end face 72 are less than 15 degrees, a length of the first end face 71 in the arrangement direction of the two split protrusions 74 is excessively large, which may affect arrangement of another component of the electro-mechanical brake apparatus 100 in this application. In addition, the excessively large length of the first end face 71 also increases an overall size of the electro-mechanical brake apparatus 100 in this application, which is not conducive to control of the overall volume of the electro-mechanical brake apparatus 100.

When angles of the first surface 711 and the third surface 713 relative to the second end face 72 are greater than 25 degrees, a thickness of the split piston 70 in the axial direction of the ball screw 41 is excessively large, and structure strength of the middle part of the second end face 72 is increased correspondingly. It is difficult for the middle part of the second end face 72 to be in contact with the friction plate 21 under effect of the driving force of the ball screw 41, affecting split effect of the split piston 70 on the driving force. In addition, the excessively large thickness of the split piston 70 in the axial direction of the ball screw 41 may also affect arrangement of another component of the electro-mechanical brake apparatus 100 in this application, for example, the brake motor 50. In addition, the excessively large thickness of the split piston 70 also increases an axial dimension of the electro-mechanical brake apparatus 100 in this application, which is not conducive to control of the overall volume of the electro-mechanical brake apparatus 100.

Therefore, in the electro-mechanical brake apparatus 100 in this application, a range of the angle of the first end face 71 relative to the second end face 72 is controlled, so that when structure stability of the split piston 70 is ensured, split effect of the split piston 70 on a driving force can be ensured, and impact on arrangement of another component due to a dimension setting of the split piston 70 can be avoided, which is also conducive to control of the overall size of the electro-mechanical brake apparatus 100 in this application.

In an embodiment, the angle of the first surface 711 relative to the second end face 72 is different from the angle of the third surface 713 relative to the second end face 72. In an embodiment, the angle of the first surface 711 relative to the second end face 72 ranges from 15 degrees to 25 degrees. In an embodiment, an angle of the second surface 712 relative to the second end face 72 ranges from 15 degrees to 25 degrees.

In an embodiment, the angle of the first surface 711 relative to the second end face 72 is equal to the angle of the third surface 713 relative to the second end face 72.

In an embodiment, a driving force applied by the ball screw 41 to the split piston 70 in the axial direction of the ball screw 41 ranges from 35 kN to 65 kN.

In an embodiment, a dimension in a length direction of the second end face 72 is greater than a dimension in a width direction of the second end face 72 and greater than a dimension in a thickness direction of the first end face 71 and the second end face 72. The length direction of the second end face 72 is the arrangement direction of the two split protrusions 74, and the width direction of the second end face 72, the length direction of the second end face 72, and the thickness direction of the first end face 71 and the second end face 72 are perpendicular to each other. In other words, a dimension of the second end face 72 in the arrangement direction of the two split protrusions 74 is larger. When the two split protrusions 74 are used to split a driving force, the larger length dimension of the second end face 72 can achieve better split effect on the driving force, to further ensure that a force applied to the first friction plate 211 is even.

In an embodiment, the arrangement direction of the two split protrusions 74 is parallel to a length direction of one friction plate 21. In other words, a length direction of the split piston 70 is parallel to a length direction of the first friction plate 211. This ensures contact between the split piston 70 and the first friction plate 211, and prevents transfer of a driving force split by the split piston 70 from being affected because the length direction of the split piston 70 intersects with the length direction of the first friction plate 211.

The arrangement direction of the two split protrusions 74 is approximately parallel to a circumferential tangent of the brake disc 1002. In other words, the length direction of the first friction plate 211 is approximately parallel to the circumferential tangent of the brake disc 1002, and the two split protrusions 74 are arranged in the length direction of the friction plate 21. In a braking process of the electro-mechanical brake apparatus 100 in this application, the split piston 70 splits the driving force of the ball screw 41 and then acts on the first friction plate 211, to increase pushing forces applied by two sides of the split piston 70 in the length direction of the friction plate 21 to the friction plate 21, to increase an effective contact area between the first friction plate 211 and the brake disc 1002. This increases a friction force between the first friction plate 211 and the brake disc 1002, and improves braking efficiency and braking effect of the electro-mechanical brake apparatus 100 in this application.

In an embodiment, an outer diameter of each split protrusion 74 is less than the inner diameter of the transmission groove 73.

FIG. 11 is a diagram of a structure of the second end face 72 of the split piston 70 in the electro-mechanical brake apparatus 100 according to this application. For ease of description of a position relationship between the transmission groove 73 and the second end face 72, a dashed line is used in FIG. 11 to describe a geometric contour of the transmission groove 73.

As shown in FIG. 11, the split piston 70 may transfer a driving force to the friction plate 21 through the two split protrusions 74. Therefore, when contact areas between the friction plate 21 and the split protrusions 74 are excessively large, pressure applied by the split piston 70 to the two sides of the friction plate 21 is greater than pressure applied by the split piston 70 to the middle part of the friction plate 21. As a result, a force applied to the friction plate 21 is dispersed. This may cause excessively small pressure between the friction plate 21 and the brake disc 1002, and consequently, an excessively small friction force between the friction plate 21 and the brake disc 1002, in a braking process of the electro-mechanical brake apparatus 100.

Therefore, in the electro-mechanical brake apparatus 100, a dimension of each split protrusion 74 is limited, to control a contact area between each split protrusion 74 and the friction plate 21. This ensures a range of pressure applied by the split piston 70 to the friction plate 21 through the split protrusions 74, so that the friction plate 21 can brake the brake disc 1002 under effect of the driving force transferred by the ball screw 41. This ensures braking efficiency and braking effect of the electro-mechanical brake apparatus 100 in this application.

In an embodiment, the spacing between the two split protrusions 74 is greater than the outer diameter of each split protrusion 74. Based on a distribution pattern of pressure applied to the friction plate 21 when a single split protrusion 74 acts on the friction plate 21, when the two split protrusions 74 arranged at the spacing simultaneously abut against a same surface of the friction plate 21, a remaining region of the friction plate 21 between two regions against which the two split protrusions 74 abut is simultaneously affected by pressure applied by the two split protrusions 74. In addition, in a braking process of the electro-mechanical brake apparatus 100, the second end face 72 between the two split protrusions 74 also abuts against the friction plate 21 under effect of a driving force.

In other words, in a braking process of the electro-mechanical brake apparatus 100, the middle part of the friction plate 21 is simultaneously subjected to pressure from the two split protrusions 74 and the second end face 72.

In embodiments of this application, in the electro-mechanical brake apparatus 100, the spacing between the two split protrusions 74 is increased, to increase a length of the second end face 72 between the two split protrusions 74, and increase a contact area between the middle part of the second end face 72 and the friction plate 21. This avoids a case in which pressure applied by the split piston 70 to the friction plate 21 is concentrated on the two sides of the friction plate 21 in the length direction of the friction plate 21, so that pressure applied by the second end face 72 to the friction plate 21 is relatively dispersed, thereby ensuring braking efficiency and braking effect of the electro-mechanical brake apparatus 100.

In an embodiment, the split piston 70 includes two opposite ends in the arrangement direction of the split protrusions 74, one split protrusion 74 and one end of the split piston 70 are adjacently arranged, and the other split protrusion 74 and the other end of the split piston 70 are adjacently arranged. The axis of the ball screw 41 coincides with the axis of the transmission groove 73. In the arrangement direction of the two split protrusions 74, the axis of the transmission groove 73 is between the two split protrusions 74. In other words, in the arrangement direction of the two split protrusions 74, the two split protrusions 74 are disposed on the two sides of the second end face 72 in the arrangement direction of the two split protrusions 74, and the groove bottom 731 of the transmission groove 73 corresponds to the middle part of the second end face 72.

In a braking process of the electro-mechanical brake apparatus 100, the ball screw 41 transfers a driving force to the second end face 72 through the transmission groove 73, and transfers the driving force to the friction plate 21 through the two split protrusions 74 that are relatively close to an edge of the split piston 70, so that better split effect on the driving force can be achieved. In addition, the ball screw 41 transfers the driving force to the two split protrusions 74 that are respectively arranged on two sides of the axis of the ball screw 41, to further help the ball screw 41 transfer the driving force to the friction plate 21 through the middle part of the second end face 72 of the split piston 70, so that the middle part of the second end face 72 is in full contact with the friction plate 21, and a force applied to the friction plate 21 in the length direction of the friction plate 21 is more even. This improves braking stability of the electro-mechanical brake apparatus 100 in this application.

In an embodiment, in the arrangement direction of the two split protrusions 74, both a spacing between the one split protrusion 74 and the one end of the split piston 70 and a spacing between the other split protrusion 74 and the other end of the split piston 70 are less than the outer diameter of each split protrusion 74. In other words, in this embodiment of this application, a spacing between each split protrusion 74 and an adjacent end part of the split piston 70 is reduced, so that the two split protrusions 74 are relatively away from the middle part of the second end face 72. This increases the spacing between the two split protrusions 74, to ensure split effect of the two split protrusions 74 of the split piston 70 and the middle part of the second end face 72 on the driving force of the ball screw 41.

In a braking process of the electro-mechanical brake apparatus 100, after the driving force of the ball screw 41 is transferred to the split piston 70, the split piston 70 can abut against the two sides of the friction plate 21 under an action of the two split protrusions 74, so that the two sides of the friction plate 21 can also abut against the brake disc 1002 under effect of the driving force. This increases an effective contact area between the friction plate 21 and the brake disc 1002, and improves braking efficiency of the electro-mechanical brake apparatus 100 in this application.

In an embodiment, the second end face 72 includes two groups of auxiliary protrusions 75, each group of auxiliary protrusions 75 includes one or more auxiliary protrusions 75, and in an orientation of the opening of the transmission groove 73, a height of each auxiliary protrusion 75 is less than a height of each split protrusion 74. In the arrangement direction of the two split protrusions 74, one group of auxiliary protrusions 75 and the one split protrusion 74 are adjacently arranged, the other group of auxiliary protrusions 75 and the other split protrusion 74 are adjacently arranged, and a spacing between the one group of auxiliary protrusions 75 and the other group of auxiliary protrusions 75 is less than the spacing between the two split protrusions 74.

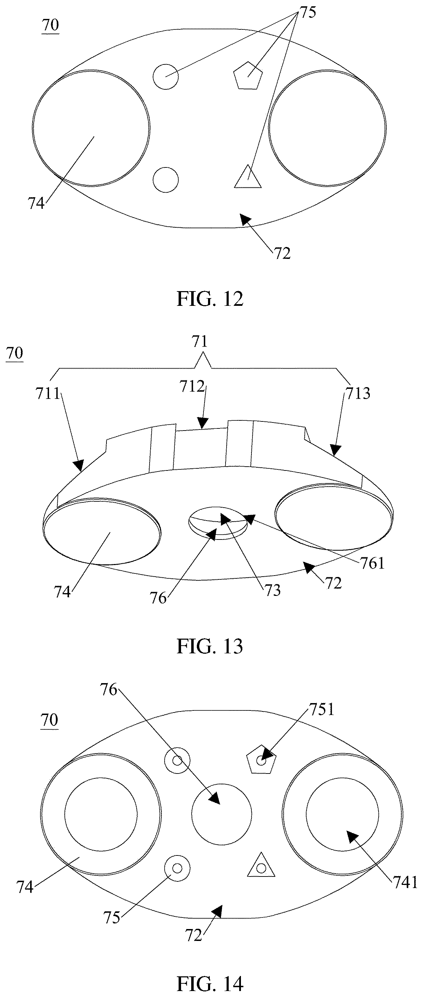

FIG. 12 is a diagram of a structure of the second end face 72 of the split piston 70 in an embodiment of the electro-mechanical brake apparatus 100 according to this application.

In an embodiment, as shown in FIG. 12, an extension axis of each auxiliary protrusion 75 is parallel to an extension axis of each split protrusion 74, and the extension axis of each auxiliary protrusion 75 is parallel to the axis of the transmission groove 73. In the arrangement direction of the two split protrusions 74, the two groups of auxiliary protrusions 75 are located between the two split protrusions 74. The two split protrusions 74 are configured to abut against the two sides of the friction plate 21 in the arrangement direction of the two split protrusions 74, and the two groups of auxiliary protrusions are configured to split driving forces in regions between a middle part and two sides of the split piston 70.

In a braking process of the electro-mechanical brake apparatus 100, the driving force transferred by the ball screw 41 is simultaneously split to the two split protrusions 74 and the two groups of auxiliary protrusions 75. The two groups of auxiliary protrusions 75 cooperate with the two split protrusions 74 to jointly push a same surface of the first friction plate 211 to slide toward the brake disc 1002 and abut against the brake disc 1002, to brake the wheel 1001.

In a process in which the ball screw 41 drives the split piston 70 to abut against the first friction plate 211, the middle part of the second end face 72 has a larger deformation amount in a thickness direction of the split piston 70 under effect of the driving force, and the two sides of the second end face 72 have smaller deformation amounts because the two sides are away from the ball screw 41. In other words, in the arrangement direction of the two split protrusions 74, a deformation amount of the second end face 72 is gradually larger from the two sides to the middle part of the second end face 72.

In embodiments of this application, the split protrusions 74 enable the two sides of the split piston 70 with smaller deformation amounts to abut against the first friction plate 211 in a braking process of the electro-mechanical brake apparatus 100, and the middle part that is of the second end face 72 and that is close to the axis of the transmission groove 73 may directly abut against the first friction plate 211 under effect of the driving force of the ball screw 41. In the electro-mechanical brake apparatus 100 in this application, one group of auxiliary protrusions 75 is disposed between each split protrusion 74 and the axis of the transmission groove 73, and the height of the auxiliary protrusion 75 is less than the height of the split protrusion 74, so that a contact area between the split piston 70 and the first friction plate 211 can be further increased under an action of the auxiliary protrusions 75. In this way, distribution of pressure applied to the friction plate 21 is improved, so that the pressure applied to the friction plate 21 is more even. This improves braking efficiency of the electro-mechanical brake apparatus 100 in this application.

In an embodiment, an arrangement direction of a group of auxiliary protrusions 75 is perpendicular to the arrangement direction of the two split protrusions 74. As shown in FIG. 12, each group of auxiliary protrusions 75 includes two auxiliary protrusions 75. An arrangement direction of the two auxiliary protrusions 75 in each group of auxiliary protrusions 75 is perpendicular to the arrangement direction of the two split protrusions 74.

In other words, the arrangement direction of the two auxiliary protrusions 75 in each group of auxiliary protrusions 75 is a width direction of the split piston 70. In this case, the split piston 70 can further improve distribution, of pressure applied to the friction plate 21, in a width direction through the auxiliary protrusions 75, so that a force applied to the friction plate 21 is more even. This further improves braking efficiency of the electro-mechanical brake apparatus 100 in this application.

In an embodiment, auxiliary protrusions 75 are in different shapes. As shown in FIG. 12, auxiliary protrusions 75 in each group of auxiliary protrusions 75 are in a same shape, and auxiliary protrusions 75 in each group of auxiliary protrusions 75 are in different shapes.

In some other embodiments, in embodiments of this application, a quantity of auxiliary protrusions 75 in each group of auxiliary protrusions 75 and a morphological feature of each auxiliary protrusion 75 may be further adjusted according to a requirement on distribution of pressure applied to the friction plate 21 and implementation of a specific eccentric adjustment function of the electro-mechanical brake apparatus 100. This is not particularly limited in this application.

In an embodiment, the second end face 72 includes a central groove 76, an orientation of an opening 761 of the central groove 76 is opposite to the orientation of the opening 732 of the transmission groove 73, a depth of the central groove 76 is less than a depth of the transmission groove 73, and the central groove 76 is provided between the two split protrusions 74.

FIG. 13 is a diagram of a structure of the second end face 72 of the split piston 70 in the electro-mechanical brake apparatus 100 according to this application.

As shown in FIG. 13, the central groove 76 is provided in the middle part of the second end face 72, and an axis of the central groove 76 coincides with the axis of the transmission groove 73. The middle part of the second end face 72 is configured to at least partially abut against the middle part of the friction plate 21.

In a braking process of the electro-mechanical brake apparatus 100, the middle part of the second end face 72 can abut against the friction plate 21 under direct effect of the driving force of the ball screw 41. For the split piston 70, a larger driving force directly transferred through the second end face 72 to the friction plate 21 indicates a larger extrusion deformation amount of the middle part of the second end face 72 caused by extruding the friction plate 21, and correspondingly, a higher warping degree of two ends of the second end face 72 in the arrangement direction of the two split protrusions 74. As a result, it may be difficult for the two split protrusions 74 to split a driving force, causing an uneven force applied to the friction plate 21.

Therefore, in the electro-mechanical brake apparatus 100 in this application, the central groove 76 is provided in the middle part of the second end face 72, to reduce a contact area between the middle part of the second end face 72 and the middle part of the friction plate 21, control a magnitude of a driving force applied by the ball screw 41 directly to the friction plate 21 through the middle part of the second end face 72, and ensure split effect of the split protrusions 74 on a driving force. In this way, it is ensured that the friction plate 21 can perform relative sliding under a joint action of the two split protrusions 74 of the split piston 70 and the middle part of the second end face 72, thereby ensuring braking effect of the friction plate 21 on the brake disc 1002. This ensures braking effect of the electro-mechanical brake apparatus 100 in this application.

In an embodiment, a groove bottom of the central groove 76 communicates with a groove bottom 731 of the transmission groove 73. As shown in FIG. 13, an inner diameter of the central groove 76 is less than the inner diameter of the transmission groove 73 and less than an outer diameter of the ball screw 41. This ensures that the ball screw 41 can transfer a driving force to the split piston 70 through the groove bottom 731 of the transmission groove 73, thereby ensuring the braking function of the electro-mechanical brake apparatus 100 in this application.

In a braking process of the electro-mechanical brake apparatus 100, the ball screw 41 generates heat while rotating around the axis of the ball screw 41. The heat may be dissipated outward through the central groove 76, so that the heat is dissipated from the ball screw 41. In addition, the second end 41b of the ball screw 41 is accommodated in the transmission groove 73, and the ball screw 41 also slides toward the groove bottom 731 of the transmission groove 73 while rotating around the axis of the ball screw 41. The central groove 76 is configured to connect an external environment to the transmission groove 73, to avoid impact on running of the ball screw 41 due to a difference between internal pressure and external pressure of the transmission groove 73. This ensures reliable running of the electro-mechanical brake apparatus 100 in this application. In an assembly process of the electro-mechanical brake apparatus 100 in this application, communication between the central groove 76 and the transmission groove 73 is also conducive to assembly of the ball screw 41 and cleanness check on the ball screw 41.

In embodiments of this application, the communication between the central groove 76 and the transmission groove 73 also facilitates processing of the split piston 70.

In an embodiment, each split protrusion 74 includes a pressure reduction groove 741, and an orientation of an opening of each pressure reduction groove 741 is opposite to the orientation of the opening 732 of the transmission groove 73.

FIG. 14 is a diagram of a structure of the second end face 72 of the split piston 70 in another embodiment of the electro-mechanical brake apparatus 100 according to this application.

As shown in FIG. 14, an axis of each pressure reduction groove 741 coincides with an axis of the split protrusion 74. Each pressure reduction groove 741 is configured to reduce a contact area between a middle part of the corresponding split protrusion 74 and the friction plate 21, to ensure that an edge of each split protrusion 74 is in contact with the friction plate 21, and avoid a case in which a pushing force of an edge of a split protrusion 74 is reduced because pressure applied by the split protrusion 74 to the friction plate 21 is concentrated in a middle part of the split protrusion 74. In this way, in a braking process of the electro-mechanical brake apparatus 100, a driving force split to each split protrusion 74 can be transferred to the friction plate 21 through the edge of each split protrusion 74. This widens a force bearing surface of the friction plate 21, so that an effective contact area between the friction plate 21 and the brake disc 1002 can be increased under an action of the split protrusions 74, to improve braking efficiency of the electro-mechanical brake apparatus 100 in this application.

In an embodiment, an inner diameter of each pressure reduction groove 741 is less than the inner diameter of the central groove 76. As shown in FIG. 14, an area of each split protrusion 74 is smaller than an area of the middle part of the second end face 72 between the two split protrusions 74. Therefore, an area, of each split protrusion 74, reduced by using the pressure reduction groove 741 is smaller than an area, of the middle part of the second end face 72, reduced by using the central groove 76, to enable a dimension setting of the pressure reduction groove 741 and a dimension setting of the central groove 76 to match an actual setting position, and prevent transfer of a driving force applied by the split piston 70 to the friction plate 21 from being affected because a dimension of the pressure reduction groove 741 is excessively large or a dimension of the central groove 76 is excessively small. This ensures braking efficiency of the electro-mechanical brake apparatus 100 in this application.

In an embodiment, as shown in FIG. 14, each auxiliary protrusion 75 includes a pressure reduction hole 751, and each pressure reduction hole 751 is configured to reduce a contact area between a middle part of the corresponding auxiliary protrusion 75 and the friction plate 21, to ensure that an edge of each auxiliary protrusion 75 is in contact with the friction plate 21. In this way, in a braking process of the electro-mechanical brake apparatus 100, a driving force split to each split protrusion 74 can be transferred to the friction plate 21 through the edge of each auxiliary protrusion 75. This widens a force bearing surface of the friction plate 21, so that an effective contact area between the friction plate 21 and the brake disc 1002 can be increased under an action of the auxiliary protrusions 75, to improve braking efficiency of the electro-mechanical brake apparatus 100 in this application.

Therefore, based on definitions in the foregoing embodiments, in the electro-mechanical brake apparatus 100 in this application, the ball screw 41 is rotatably connected to the caliper body 30, so that a driving force output by the brake motor 50 can be transferred to the ball screw 41 through the reducer 60, and the ball screw 41 rotates and drives the split piston 70 to slide, to transfer the driving force to the two friction plates 21, to make the two friction plates 21 slide toward the brake disc 1002 to brake the brake disc 1002. This implements the braking function of the electro-mechanical brake apparatus 100 in this application.

In the electro-mechanical brake apparatus 100 in this application, the two split protrusions 74 are further disposed on the second end face 72 of the split piston 70, so that a driving force transferred to the split piston 70 can be split to the two split protrusions 74 and the middle part of the second end face 72, and the two split protrusions 74 and the middle part of the second end face 72 are used to jointly push the friction plate 21 to slide. This increases a contact area between the split piston 70 and the friction plate 21, so that a force applied to the friction plate 21 is even. In addition, in the electro-mechanical brake apparatus 100 in this application, the split piston 70 is used to split the driving force to the two split protrusions 74, to achieve effect similar to that of multi-cylinder braking. In this way, a length of a part that is of the split piston 70 and that is in contact with the friction plate 21 is increased, so that a force applied to the friction plate 21 is more even. In addition, the overall volume of the electro-mechanical brake apparatus 100 is effectively controlled.

In the electro-mechanical brake apparatus 100 in this application, the split piston 70 including the two split protrusions 74 is disposed, so that pressure applied to the friction plate 21 is even. This improves braking efficiency of the electro-mechanical brake apparatus 100, and effectively controls the overall volume of the electro-mechanical brake apparatus 100. When the electro-mechanical brake apparatus 100 in this application is used in a vehicle, the electro-mechanical brake apparatus 100 in this application can output a driving force through the brake motor 50, and act on the brake disc 1002 through the reducer 60, the ball screw 41, the split piston 70, the caliper body 30, and the friction plates 21, to implement a braking function of the vehicle. The two split protrusions 74 of the split piston 70 in the electro-mechanical brake apparatus 100 cooperate with the middle part of the second end face 72, to improve braking efficiency of the electro-mechanical brake apparatus 100, so that the vehicle has better braking effect and a longer service life. In addition, the electro-mechanical brake apparatus 100 facilitates miniaturization to adapt to wheel-side space of the vehicle, and facilitates arrangement of internal components near the wheel 1001 of the vehicle and control of an overall volume of the vehicle.

The structure of the electro-mechanical brake apparatus 100 in this application is further applied to another application scenario in which there is rotation motion and feed motion. For example, the structure of the electro-mechanical brake apparatus 100 is further applied to a steering system, a machine tool device, and the like. This is not particularly limited in this application.

In an embodiment, the electro-mechanical brake apparatus 100 includes a caliper body 30, the caliper body 30 is configured to fasten the brake motor 50, the reducer 60, and the ball screw 41, the caliper body 30 includes one group of limiting structures arranged around the ball screw 41, the first end face 71 includes another group of limiting structures arranged around the transmission groove 73, and the one group of limiting structures and the another group of limiting structures include a plurality of limiting protrusions and a plurality of limiting grooves.

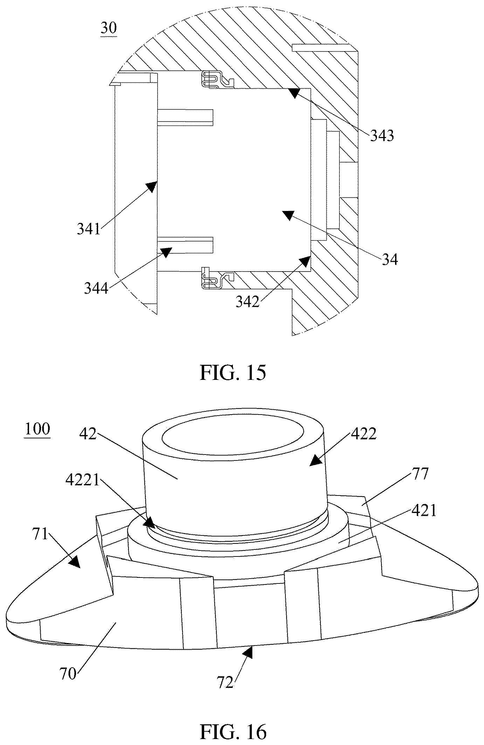

Refer to FIG. 15 and FIG. 16. FIG. 15 is a diagram of a partial cross-sectional structure of the caliper body 30 in the electro-mechanical brake apparatus 100 according to this application. FIG. 16 is a diagram of a connection structure of the split piston 70 and the nut 42 in the electro-mechanical brake apparatus 100 according to this application.

In an embodiment, as shown in FIG. 15 and FIG. 16, the caliper body 30 includes an accommodation groove 34, and the accommodation groove 34 is configured to at least partially accommodate the second end 41b of the ball screw 41 and the split piston 70. An axis of the accommodation groove 34 coincides with the axis of the ball screw 41. An opening 341 of the accommodation groove 34 faces the first friction plate 211, and the first end face 71 of the split piston 70 extends into the accommodation groove 34 from the opening 341 of the accommodation groove 34. A part that is of the second end 41b of the ball screw 41 and that is close to the first friction plate 211 extends into the transmission groove 73, to drive the split piston 70 to slide. A remaining part of the second end 41b of the ball screw 41 is accommodated in the accommodation groove 34. In the axial direction of the ball screw 41, the first end 41a of the ball screw 41 extends out of the caliper body 30 through a groove bottom 342 of the accommodation groove 34, and is in transmission connection to the reducer 60.

In a circumferential direction of the ball screw 41, a groove wall 343 of the accommodation groove 34 includes one group of limiting structures. As shown in FIG. 15, the groove wall 343 of the accommodation groove 34 includes a plurality of limiting grooves 344, and an extension direction of each limiting groove 344 is parallel to the axial direction of the ball screw 41. In the circumferential direction of the ball screw 41, the first end face 71 includes another group of limiting structures. As shown in FIG. 16, the second surface 712 of the first end face 71 includes a plurality of limiting protrusions 77, the plurality of limiting protrusions 77 extend toward the groove bottom 342 of the accommodation groove 34 in the axial direction of the ball screw 41, and the plurality of limiting protrusions 77 surround the transmission groove 73 in the circumferential direction of the ball screw 41.

In embodiments of this application, a quantity of limiting protrusions 77 is equal to a quantity of limiting grooves 344, and each limiting protrusion 77 may extend into one limiting groove 344 in the axial direction of the ball screw 41, to limit rotation of the split piston 70, and enable the split piston 70 to slide relative to the caliper body 30 in the circumferential direction of the ball screw 41. In other words, the limiting protrusions 77 cooperate with the limiting grooves 344, to limit a circumferential position of the split piston 70, and ensure that the arrangement direction of the two split protrusions 74 is always parallel to the length direction of the friction plate 21 in a braking process of the electro-mechanical brake apparatus 100. This ensures a contact area between the split piston 70 and the friction plate 21 in a braking process of the electro-mechanical brake apparatus 100, and ensures that disposing of the split piston 70 improves braking efficiency of the electro-mechanical brake apparatus 100 in this application.

In another embodiment, the groove wall 343 of the accommodation groove 34 includes a plurality of limiting protrusions, and the first end face 71 includes a plurality of limiting grooves. In some other embodiments, the groove wall 343 of the accommodation groove 34 includes at least one limiting protrusion and at least one limiting groove, the first end face 71 includes at least one limiting groove and at least one limiting protrusion, the limiting protrusion on the first end face 71 corresponds to the limiting groove on the groove wall 343 of the accommodation groove 34, and the limiting groove on the first end face 71 corresponds to the limiting protrusion on the groove wall 343 of the accommodation groove 34.

In an embodiment, the transmission groove 73 is in transmission connection to the second end 41b of the ball screw 41 through a nut 42. An outer circumferential surface of the nut 42 includes an annular protrusion 421, and an outer diameter of the annular protrusion 421 is greater than the inner diameter of the transmission groove 73. The nut 42 is divided into a screw transmission section 422 and a piston transmission section 423 in an axial direction of the nut 42 with the annular protrusion 421 as a dividing line, a length of the screw transmission section 422 is greater than a length of the piston transmission section 423, an inner circumferential surface of the screw transmission section 422 includes one section of thread, the one section of thread is configured to engage with a thread on the outer circumferential surface of the second end 41b of the ball screw 41, and the piston transmission section 423 is configured to be embedded in the transmission groove 73.

FIG. 17 is a diagram of an appearance structure of the nut 42 in the electro-mechanical brake apparatus 100 according to this application.

As shown in FIG. 17, the electro-mechanical brake apparatus 100 in this application includes the nut 42, and the annular protrusion 421 of the nut 42 is configured to abut against the first end face 71 of the split piston 70. In the axial direction of the ball screw 41, the annular protrusion 421 is configured to abut against the second surface 712 of the first end face 71 of the split piston 70, to transfer the driving force of the ball screw 41 to the split piston 70 through the nut 42. The accommodation groove 34 is configured to accommodate the nut 42, the nut 42 is configured to be sleeved on the ball screw 41, and the inner circumferential surface of the screw transmission section of the nut 42 is in thread connection to an outer circumferential surface of the ball screw 41 through the one section of thread, so that in a braking process of the electro-mechanical brake apparatus 100 in this application, rotation of the ball screw 41 around the axis of the ball screw 41 can be transformed into sliding of the nut 42 in the axial direction of the ball screw 41 under effect of the thread connection between the outer circumferential surface of the ball screw 41 and the inner circumferential surface of the screw transmission section 422. The nut 42 pushes, through the annular protrusion 421, the split piston 70 to slide toward the friction plate 21, and the friction plate 21 slides toward the brake disc 1002 to brake the brake disc 1002, to implement the braking function of the electro-mechanical brake apparatus 100 in this application.

In an embodiment, an outer circumferential surface of the piston transmission section 423 includes another section of thread, the another section of thread is configured to engage with a thread on the inner groove wall 733 of the transmission groove 73, and a length of the another section of thread is less than a length of the one section of thread. For ease of description, the one section of thread on the screw transmission section 422 is defined as a first thread section 424, and the another section of thread on the piston transmission section 423 is defined as a second thread section 425.

As shown in FIG. 17, an axis of the piston transmission section 423 coincides with the axis of the ball screw 41, the transmission groove 73 is configured to accommodate the piston transmission section 423, and the piston transmission section 423 is configured to partially accommodate the second end 41b of the ball screw 41. An inner diameter of the piston transmission section 423 is greater than the outer diameter of the ball screw 41, to prevent an inner wall of the piston transmission section 423 from affecting displacement of the ball screw 41 along the axis of the ball screw 41.

In embodiments of this application, the outer circumferential surface of the piston transmission section 423 is in thread connection to the inner groove wall 733 of the transmission groove 73 through the second thread section 425. In this way, the nut 42 is fastened to the split piston 70, so that the nut 42 can further transfer a driving force to the split piston 70 through the second thread section 425 on the outer circumferential surface of the piston transmission section 423 and the thread on the inner groove wall 733 of the transmission groove 73.

In addition, the transmission groove 73 is used to accommodate the piston transmission section 423, so that axial space occupied by the nut 42 can be reduced, to compress the axial dimension of the electro-mechanical brake apparatus 100. This facilitates miniaturization of the electro-mechanical brake apparatus 100 in this application.

In another embodiment, the nut 42 is fastened to the split piston 70 in a fastening manner of an interference fit between the transmission groove 73 and the piston transmission section 423. In another embodiment, in the electro-mechanical brake apparatus 100 in this application, the nut 42 may alternatively be fastened to the split piston 70 by changing an outer contour shape of the piston transmission section 423 and a contour shape of the inner groove wall 733 of the transmission groove 73. For example, the outer contour shape of the piston transmission section 423 is set to an ellipse, to cooperate with the transmission groove 73 to limit relative rotation of the split piston 70 and the nut 42. In some other embodiments, the piston transmission section 423 may alternatively be fastened to the split piston 70 in another manner. This is not particularly limited in this application.

In an embodiment, a pitch of the second thread section 425 is less than a pitch of the first thread section 424. Smaller pitches of two structures that are in thread connection to each other indicate higher strength of the connection between the two connected structures. In an actual use process of the electro-mechanical brake apparatus 100 in this application, the brake motor 50 rotates forward to implement braking, and further rotates in reverse to drive the friction plates 21 to be away from the brake disc 1002 to terminate the braking. Therefore, the second thread section 425 with the smaller pitch is disposed, so that strength of connection between the piston transmission section 423 and the transmission groove 73 can be improved, to avoid breakage of thread connection between the piston transmission section 423 and the transmission groove 73 due to a driving force transferred by the ball screw 41 when the ball screw 41 rotates in reverse. This ensures reliable transfer of a driving force by the electro-mechanical brake apparatus 100 in this application.

In an embodiment, the screw transmission section 422 is configured to be embedded in the caliper body 30, an outer circumferential surface of the screw transmission section 422 includes an annular groove 4221, the annular groove 4221 is configured for a sealing circle 81 to be embedded in, and the sealing circle 81 is configured to seal a gap between the screw transmission section 422 and the caliper body 30.

An axis of the sealing circle 81 coincides with the axis of the ball screw 41. In a radial direction of the ball screw 41, an outer circumferential surface of the sealing circle 81 is configured to abut against the groove wall 343 of the accommodation groove 34 of the caliper body 30, and an inner circumferential surface of the sealing circle 81 is configured to abut against a groove bottom of the annular groove 4221, to seal a gap between the screw transmission section 422 and the groove wall 343 of the accommodation groove 34, to prevent external impurities from entering the first end 41a of the ball screw 41 and affecting braking effect, and ensure a sealing requirement of the electro-mechanical brake apparatus 100 in this application.

In an embodiment, the sealing circle 81 is a corrugated sealing circle, the corrugated sealing circle may expand a radial dimension of the corrugated sealing circle as the nut 42 slides, and it is ensured that the sealing circle 81 seals the gap between the screw transmission section 422 and the groove wall 343 of the accommodation groove 34. In other words, the sealing circle 81 is disposed as a corrugated sealing circle, to ensure that the sealing circle 81 always meets the sealing requirement of the electro-mechanical brake apparatus 100 in this application in a working process of the electro-mechanical brake apparatus 100. In addition, the corrugated sealing circle can further limit relative positions of the nut 42 and the groove bottom 342 of the accommodation groove 34 when the electro-mechanical brake apparatus 100 terminates braking.

In an embodiment, the electro-mechanical brake apparatus 100 in this application further includes a sealing ring 82, and an axis of the sealing ring 82 coincides with the axis of the ball screw 41. In the radial direction of the ball screw 41, an outer circumferential surface of the sealing ring 82 is configured to abut against the groove wall 343 of the accommodation groove 34 of the caliper body 30, and an inner circumferential surface of the sealing ring 82 is configured to abut against the outer circumferential surface of the screw transmission section 422, to seal a gap between the screw transmission section 422 and the groove wall 343 of the accommodation groove 34.

In embodiments of this application, the sealing ring 82 is further configured to cooperate with the sealing circle 81 to meet a waterproof requirement and a dustproof requirement of the electro-mechanical brake apparatus 100 in this application. In an embodiment, the sealing ring 82 cooperates with the sealing circle 81 to meet waterproof and dustproof requirements of IP67 and IP6K9K.

In an embodiment, the transmission groove 73 is configured to be in direct transmission connection to the second end 41b of the ball screw 41. A thread on the inner groove wall 733 of the transmission groove 73 is configured to engage with a thread on the outer circumferential surface of the second end 41b of the ball screw 41.

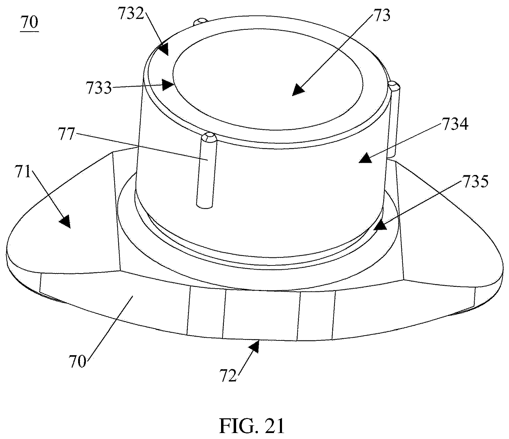

Refer to FIG. 18 to FIG. 21. FIG. 18 is a diagram of a partial cross-sectional structure of components inside the caliper body 30 in the electro-mechanical brake apparatus 100 according to this application. FIG. 19 is a diagram of a partial enlarged structure of components inside the caliper body 30 in the electro-mechanical brake apparatus 100 according to this application. FIG. 20 is a diagram of a connection structure of the split piston 70 and the ball screw 41 in the electro-mechanical brake apparatus 100 according to this application. FIG. 21 is a diagram of an appearance structure of the split piston 70 in the electro-mechanical brake apparatus 100 according to this application.

As shown in FIG. 18 to FIG. 21, the transmission groove 73 is configured to accommodate the second end 41b of the ball screw 41. In the radial direction of the ball screw 41, the outer circumferential surface of the ball screw 41 is configured to engage with the inner groove wall 733 of the transmission groove 73, so that in a braking process of the electro-mechanical brake apparatus 100 in this application, rotation of the ball screw 41 around the axis of the ball screw 41 can be directly transformed into sliding of the split piston 70 in the axial direction of the ball screw 41 under effect of thread connection between the outer circumferential surface of the ball screw 41 and the inner groove wall 733 of the transmission groove 73. In addition, the friction plate 21 is pushed to slide toward the brake disc 1002 to brake the brake disc 1002, to implement the braking function of the electro-mechanical brake apparatus 100 in this application.

In an embodiment, a length of the thread on the inner groove wall 733 of the transmission groove 73 is less than the depth of the transmission groove 73. When the electro-mechanical brake apparatus 100 brakes, in a process in which the ball screw 41 rotates forward to drive the split piston 70 to slide, the groove bottom 731 of the transmission groove 73 slides away from the ball screw 41. When the electro-mechanical brake apparatus 100 terminates braking, in a process in which the ball screw 41 rotates in reverse to drive the split piston 70 to slide, the groove bottom 731 of the transmission groove 73 slides toward the ball screw 41.

In other words, in a working process of the electro-mechanical brake apparatus 100, a spacing between the groove bottom 731 of the transmission groove 73 and an end part that is of the ball screw 41 and that is away from the brake motor 50 is changed with working progress. Therefore, the setting of the length of the thread on the inner groove wall 733 of the transmission groove 73 can ensure that the ball screw 41 is not affected by the groove bottom 731 of the transmission groove 73 in a working process. This ensures the braking function of the electro-mechanical brake apparatus 100 in this application.

In an embodiment, the depth of the transmission groove 73 is greater than a spacing between the first end face 71 and the second end face 72. The transmission groove 73 includes an extension section 734, the extension section 734 extends away from the first end face 71 of the split piston 70 in the axial direction of the ball screw 41, and the extension section 734 is configured to extend into the accommodation groove 34 of the caliper body 30. As shown in FIG. 18, in the radial direction of the ball screw 41, the accommodation groove 34, the extension section 734, and the second end 41b of the ball screw 41 are sequentially sleeved. An outer diameter of the extension section 734 is equal to an inner diameter of the accommodation groove 34, to implement radial positioning of the split piston 70.

In addition, when the electro-mechanical brake apparatus 100 in this application uses the structure shown in FIG. 18 to FIG. 21, limiting protrusions 77 of the split piston 70 may surround an outer circumferential surface of the extension section 734, as shown in FIG. 21, to cooperate with limiting grooves 344 of the accommodation groove 34 to limit rotation of the split piston 70. An annular groove 735. The annular groove 735 is configured for a sealing circle 81 to be embedded in, and the sealing circle 81 is configured to seal a gap between the outer groove wall of the transmission groove 73 and the caliper body 30.

An axis of the sealing circle 81 coincides with the axis of the ball screw 41. As shown in FIG. 21, the annular groove 735 is provided on the outer circumferential surface of the extension section 734. In the radial direction of the ball screw 41, an outer circumferential surface of the sealing circle 81 is configured to abut against the groove wall 343 of the accommodation groove 34 of the caliper body 30, and an inner circumferential surface of the sealing circle 81 is configured to abut against a groove bottom of the annular groove 735, to seal a gap between the outer groove wall of the transmission groove 73 and the groove wall 343 of the accommodation groove 34, to prevent external impurities from entering the first end 41a of the ball screw 41 and affecting braking effect, and ensure a sealing requirement of the electro-mechanical brake apparatus 100 in this application.

In an embodiment, the sealing circle 81 is a corrugated sealing circle, the corrugated sealing circle may expand a radial dimension of the corrugated sealing circle as the split piston 70 slides, and it is ensured that the sealing circle 81 seals a gap between the extension section 734 and the groove wall 343 of the accommodation groove 34. In addition, the corrugated sealing circle can further limit relative positions of the split piston 70 and the groove bottom 342 of the accommodation groove 34 when the electro-mechanical brake apparatus 100 terminates braking.

In an embodiment, the electro-mechanical brake apparatus 100 in this application further includes a sealing ring 82, and an axis of the sealing ring 82 coincides with the axis of the ball screw 41. In the radial direction of the ball screw 41, an outer circumferential surface of the sealing ring 82 is configured to abut against the groove wall 343 of the accommodation groove 34 of the caliper body 30, and an inner circumferential surface of the sealing ring 82 is configured to abut against the outer circumferential surface of the extension section 734, to seal the gap between the extension section 734 and the groove wall 343 of the accommodation groove 34.

It is clear that a person skilled in the art can make various modifications and variations to this application without departing from the protection scope of this application. This application is intended to cover these modifications and variations of this application provided that they fall within the scope of protection defined by the claims of this application and their equivalent technologies.

## Claims

1. A split-type electro-mechanical brake apparatus, wherein the electro-mechanical brake apparatus comprises a brake motor, a reducer, a ball screw, and a split piston, one end of the ball screw is configured to be in transmission connection to the brake motor through the reducer, the other end of the ball screw is configured to drive the split piston, and the split piston is configured to split a received driving force through two split protrusions, to push a same friction plate jointly through the two split protrusions to brake a wheel;
the split piston comprises two end faces that face away from each other, one end face comprises a transmission groove, and the transmission groove is configured to be in transmission connection to the other end of the ball screw; and
the two split protrusions are arranged at a spacing on the other end face, and in an arrangement direction of the two split protrusions, a length of the other end face is greater than a length of the one end face, and the spacing between the two split protrusions is less than or equal to an inner diameter of the transmission groove.

2. The electro-mechanical brake apparatus according to claim 1, wherein an area of the one end face is smaller than an area of the other end face; and
the one end face is inclined relative to the other end face, and an angle of the one end face relative to the other end face ranges from 15 degrees to 25 degrees.

3. The electro-mechanical brake apparatus according to claim 1 or 2, wherein for the other end face, a dimension in a length direction of the other end face is greater than a dimension in a width direction of the other end face and greater than a dimension in a thickness direction of the two end faces; and
the length direction of the other end face is the arrangement direction of the two split protrusions, and the width direction of the other end face, the length direction of the other end face, and the thickness direction of the two end faces are perpendicular to each other.

4. The electro-mechanical brake apparatus according to any one of claims 1 to 3, wherein an outer diameter of each split protrusion is less than the inner diameter of the transmission groove, and the spacing between the two split protrusions is greater than the outer diameter of each split protrusion.

5. The electro-mechanical brake apparatus according to any one of claims 1 to 4, wherein the split piston comprises two opposite ends in the arrangement direction of the two split protrusions;
one split protrusion and one end of the split piston are adjacently arranged, and the other split protrusion and the other end of the split piston are adjacently arranged; and
in the arrangement direction of the two split protrusions, both a spacing between the one split protrusion and the one end of the split piston and a spacing between the other split protrusion and the other end of the split piston are less than the outer diameter of each split protrusion.

6. The electro-mechanical brake apparatus according to claim 5, wherein the other end face comprises two groups of auxiliary protrusions, each group of auxiliary protrusions comprises one or more auxiliary protrusions, and in an orientation of an opening of the transmission groove, a height of each auxiliary protrusion is less than a height of each split protrusion; and
in the arrangement direction of the two split protrusions, one group of auxiliary protrusions and the one split protrusion are adjacently arranged, the other group of auxiliary protrusions and the other split protrusion are adjacently arranged, and a spacing between the one group of auxiliary protrusions and the other group of auxiliary protrusions is less than the spacing between the two split protrusions.

7. The electro-mechanical brake apparatus according to any one of claims 1 to 6, wherein the other end face comprises a central groove, an orientation of an opening of the central groove is opposite to the orientation of the opening of the transmission groove, and a depth of the central groove is less than a depth of the transmission groove; and
the central groove is provided between the two split protrusions, and a groove bottom of the central groove communicates with a groove bottom of the transmission groove.

8. The electro-mechanical brake apparatus according to claim 7, wherein each split protrusion comprises a pressure reduction groove, an orientation of an opening of each pressure reduction groove is opposite to the orientation of the opening of the transmission groove, and an inner diameter of each pressure reduction groove is less than an inner diameter of the central groove.

9. The electro-mechanical brake apparatus according to any one of claims 1 to 8, wherein the electro-mechanical brake apparatus comprises a caliper body, the caliper body is configured to fasten the brake motor, the reducer, and the ball screw, the caliper body comprises one group of limiting structures arranged around the ball screw, the one end face comprises another group of limiting structures arranged around the transmission groove, the one group of limiting structures comprises a limiting protrusion and/or a limiting groove, and the another group of limiting structures comprises a limiting groove and/or a limiting protrusion.

10. The electro-mechanical brake apparatus according to claim 9, wherein the transmission groove is in transmission connection to the other end of the ball screw through a nut;
an outer circumferential surface of the nut comprises an annular protrusion, and an outer diameter of the annular protrusion is greater than the inner diameter of the transmission groove; and
the nut is divided into a screw transmission section and a piston transmission section in an axial direction of the nut with the annular protrusion as a dividing line, a length of the screw transmission section is greater than a length of the piston transmission section, an inner circumferential surface of the screw transmission section comprises one section of thread, the one section of thread is configured to engage with a thread on an outer circumferential surface of the other end of the ball screw, and the piston transmission section is configured to be embedded in the transmission groove.

11. The electro-mechanical brake apparatus according to claim 10, wherein an outer circumferential surface of the piston transmission section comprises another section of thread, and the another section of thread is configured to engage with a thread on an inner groove wall of the transmission groove; and
a length of the another section of thread is less than a length of the one section of thread, and a pitch of the another section of thread is less than a pitch of the one section of thread.

12. The electro-mechanical brake apparatus according to claim 10 or 11, wherein the screw transmission section is configured to be embedded in the caliper body, an outer circumferential surface of the screw transmission section comprises an annular groove, the annular groove is configured for a sealing circle to be embedded in, and the sealing circle is configured to seal a gap between the screw transmission section and the caliper body.

13. The electro-mechanical brake apparatus according to claim 9, wherein the transmission groove is configured to be in direct transmission connection to the other end of the ball screw;
a thread on an inner groove wall of the transmission groove is configured to engage with a thread on an outer circumferential surface of the other end of the ball screw; and
a length of the thread on the inner groove wall of the transmission groove is less than the depth of the transmission groove.

14. The electro-mechanical brake apparatus according to claim 13, wherein the depth of the transmission groove is greater than a spacing between the two end faces, the transmission groove is configured to be embedded in the caliper body, an outer groove wall of the transmission groove comprises an annular groove, the annular groove is configured for a sealing circle to be embedded in, and the sealing circle is configured to seal a gap between the outer groove wall of the transmission groove and the caliper body.

15. A vehicle, comprising:
a plurality of wheels; and
a plurality of electro-mechanical brake apparatuses according to any one of claims 1 to 14, wherein each electro-mechanical brake apparatus is configured to brake one wheel.
